# EUROPEAN PATENT APPLICATION

(11) **EP 4 365 577 A1**
(43) Date of publication of application: **08.05.2024**
(21) Application number: 22869440.2
(22) Date of filing: 16.09.2022
(51) Int. Cl.: G01N 21/79, G01N 35/02

(54) **SAMPLE ANALYZER, AND CONTROL METHOD FOR SAMPLE ANALYZER**

(30) Priority: 17.09.2021 CN 202111095611; 17.09.2021 CN 202111094319; 16.05.2022 CN 202210530997
(71) Applicant: Shenzhen Mindray Bio-Medical Electronics Co., Ltd., Shenzhen, Guangdong 518057 (CN)
(72) Inventor: DAI, Yong, Shenzhen, Guangdong 518057 (CN); CHEN, Yueping, Shenzhen, Guangdong 518057 (CN); YU, Qi, Shenzhen, Guangdong 518057 (CN)
(74) Representative: KIPA AB
(86) International application number: PCT/CN2022/119472
(87) International publication number: WO 2023/041074

(57) **Abstract**

A sample analyzer, and a control method for a sample analyzer. The method comprises: controlling a light source assembly of a sample analyzer to generate irradiation light, wherein the irradiation light irradiates the same position of a reaction cup (321) or a liquid in the reaction cup; simultaneously collecting at least two optical signals, wherein the at least two optical signals are formed by the irradiation light irradiating the reaction cup (321) or the liquid in the reaction cup and then exiting therefrom, and the wavelengths of the at least two optical signals are different; processing the at least two optical signals to obtain at least two pieces of photo-electrical data; and performing state monitoring according to the at least two pieces of photo-electrical data, wherein the state monitoring at least comprises performing state monitoring on at least one of the liquid in the reaction cup (321), the reaction cup (321), or a detection apparatus (330) of the sample analyzer. By simultaneously collecting at least two optical signals which are formed by irradiation light irradiating a reaction cup (321) or a liquid in the reaction cup and then exiting therefrom, and processing the at least two optical signals to obtain at least two pieces of photo-electrical data, a plurality of pieces of photo-electrical data having wavelengths at the same position may be obtained, so as to obtain a more accurate processing result.

## Description

### TECHNICAL FIELD

The invention relates to the technical field of medical equipment, in particular to a sample analyzer and a method for controlling the sample analyzer.

### BACKGROUND

A sample analyzer is a device for testing and analyzing a sample. Typically, the sample analyzer may include a biochemical analyzer, an immunoassay analyzer, a coagulation analyzer, and the like. In the sample analyzer, a basic principle of a colorimetric method for detecting a concentration of a sample to be tested comprises: obtaining a detection signal by periodically detecting reaction liquid of a reactant in a reaction process, obtaining a reaction curve according to the detection signal, and obtaining a testing result of the corresponding sample to be tested according to information such as a amplitude and change rate of the curve.

Methods for signal acquisition in the related art cannot effectively determine an actual condition of a reaction cup or of the solution in the reaction cup when the reaction cup or the reactant is affected by abnormal interference, and the accuracy of the testing results cannot be ensured.

### SUMMARY

The invention provides a sample analyzer and a method for controlling the sample analyzer, which can obtain a more accurate processing result.

In a first aspect, there is provided a method for controlling a sample analyzer in an embodiment of the invention. The method includes the following operations.

A light source component of the sample analyzer is controlled to generate irradiation light(s), and the irradiation light(s) irradiates(irradiate) a same position of a reaction cup or of a liquid in the reaction cup.

At least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup, and wavelengths of the at least two optical signals are different from each other.

The at least two optical signals are processed to obtain at least two sets of photoelectric data.

State monitoring is performed by using the at least two sets of photoelectric data. The state monitoring at least includes monitoring at least one of: a state of the liquid in the reaction cup, a state of the reaction cup and a state of a detection device of the sample analyzer.

In a second aspect, there is provided a method for controlling a sample analyzer in an embodiment of the invention. The method includes the following operations.

A light source component of the sample analyzer is controlled to generate irradiation light(s), and the irradiation light(s) irradiates(irradiate) a same position of a reaction cup or of a liquid in the reaction cup.

At least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup, and wavelengths of the at least two optical signals are different from each other.

The at least two optical signals are processed to obtain at least two sets of photoelectric data. The at least two sets of photoelectric data acquired during continuous irradiation on a same reaction cup by the light source component include signal sequences respectively corresponding to at least two wavelengths, and a signal sequence corresponding to a single wavelength includes the corresponding relationships between intensities of at least two signals and timings for acquiring the at least two signals.

A testing result of the liquid in the reaction cup is obtained according to the at least two sets of photoelectric data.

In a third aspect, there is provided a method for controlling a sample analyzer in an embodiment of the invention. The method includes the following operations.

A light source component of the sample analyzer is controlled to generate irradiation light(s), and the irradiation light(s) irradiates(irradiate) a same position of a reaction cup or of a liquid in the reaction cup.

At least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup, and wavelengths of the at least two optical signals are different from each other.

The at least two optical signals are processed to obtain at least two sets of photoelectric data.

A first set of photoelectric data corresponding to a first wavelength and a second set of photoelectric data corresponding to a second wavelength are obtained from the at least two sets of photoelectric data.

The first set of photoelectric data is corrected by using the second set of photoelectric data to obtain a third set of photoelectric data.

The third set of photoelectric data is processed to obtain a processing result.

In a fourth aspect, there is provided a sample analyzer in an embodiment of the invention. The sample analyzer includes a sampling device, a reagent dispensing device, a reaction device, a detection device, and a processor.

The sampling device is configured to aspirate a sample from a sample container transported to a sampling position and dispense the aspirated sample to a reaction cup.

The reagent dispensing device is configured to dispense a reagent into the reaction cup.

The reaction device is configured to incubate the sample added in the reaction cup, and prepare a reaction liquid from the reagent and the sample.

The detection device includes a light source component, an optical signal acquisition component and an analog-to-digital conversion component. The light source component is configured to generate irradiation light(s), the irradiation light(s) irradiating a same position of the reaction cup or of the liquid in the reaction cup, and the reaction cup rotating relative to the light source component. The optical signal acquisition component is configured to simultaneously acquire at least two optical signals, the at least two optical signals being produced by a light emitted from the reaction cup or the liquid in the reaction cup after the irradiation light(s) irradiates(irradiate) the reaction cup or the liquid in the reaction cup, and wavelengths of the at least two optical signals being different from each other. The analog-to-digital conversion component is configured to perform analog-to-digital conversion on the at least two optical signals in parallel, to obtain at least two sets of photoelectric data. Each set of photoelectric data is a signal sequence resulted from corresponding relationships between intensities of signals and timings for acquiring the signals, the at least two sets of photoelectric data acquired during continuous irradiation on the same reaction cup by the light source component include signal sequences respectively corresponding to at least two wavelengths, and a signal sequence corresponding to a single wavelength includes the corresponding relationships between intensities of at least two signals and timings for acquiring the at least two signals.

The processor is configured to process the at least two sets of photoelectric data corresponding to the at least two wavelengths to obtain a processing result.

The sample analyzer and the methods for controlling the sample analyzer are provided in the embodiments of the invention. The method includes the following operations. A light source component of the sample analyzer is controlled to generate irradiation light(s), and the irradiation light(s) irradiates(irradiate) a same position of a reaction cup or of a liquid in the reaction cup. At least two optical signals are acquired simultaneously, the at least two optical signals are produced by a light emitted from the reaction cup or the liquid in the reaction cup after the irradiation light(s) irradiates(irradiate) the reaction cup or the liquid in the reaction cup, and wavelengths of the at least two optical signals are different from each other. The at least two optical signals are processed to obtain at least two sets of photoelectric data. State monitoring is performed by using the at least two sets of photoelectric data. The state monitoring at least includes monitoring at least one of: a state of the liquid in the reaction cup, a state of the reaction cup and a state of a detection device of the sample analyzer. The at least two optical signals, formed by the emitting light after the irradiation light irradiates the reaction cup or the liquid in the reaction cup, are acquired and processed to obtain at least two sets of photoelectric data. Therefore, a plurality of sets of photoelectric data corresponding to a plurality of wavelengths at the same position can be obtained, so as to obtain a more accurate processing result.

It should be understood that the foregoing general description and the following detailed description are exemplary and explanatory only and do not intended to limit the disclosed contents of the embodiments of the invention.

### BRIEF DESCRIPTION OF THE DRAWINGS

In order to more clearly illustrate the solution of embodiments of the invention, the accompanying drawings, which are to be used in the description of the embodiments, are briefly introduced. It is apparent that the drawings are some embodiments of the invention, and a person having ordinary skill in the art can obtain other drawings according to these drawings without paying inventive efforts.
FIG. 1 is a schematic structural diagram of a sample analyzer according to an embodiment of the invention.
FIG. 2 is a schematic block diagram of a sample analyzer in an implementation.
FIG. 3 is a schematic block diagram of a sample analyzer in another implementation.
FIG. 4 is a schematic diagram of an absorbance and a reaction curve obtained by performing photoelectric acquisition on a reaction liquid in a reaction cup by a photometer in the related art.
FIG. 5 is a schematic diagram of a reaction curve in an embodiment of the invention.
FIG. 6 is a schematic diagram of a plurality of signal sequences of a reaction cup in an embodiment of the invention.
FIG. 7 is a schematic diagram of a signal sequence in a detection period in an embodiment of the invention.
FIG. 8 is a schematic diagram of signal sequences of two adjacent reaction cups in an embodiment of the invention.
FIG. 9 is a schematic diagram of a signal sequence in a detection period in another embodiment of the invention.
FIG. 10 is a schematic diagram of signal sequences of two adjacent reaction cups in another embodiment of the invention.
FIG. 11 is a schematic diagram of determination of an abnormal state according to a sudden-change-in-signal characteristic in an embodiment of the invention.
FIG. 12 is a schematic diagram of determination of an abnormal state according to a sudden-change-in-signal characteristic in another embodiment of the invention.
FIG. 13 is a schematic diagram of an optical path between a light source component and an optical signal acquisition component in an embodiment of the invention.
FIG. 14 is a schematic diagram of a multi-wavelength photoelectric data acquisition circuit in the related art.
FIG. 15 is a schematic diagram of detection positions corresponding to different wavelengths in multi-wavelength photoelectric data acquisition in the related art.
Fig. 16 is a schematic diagram of simultaneous acquisition of at least two optical signals in an embodiment of the invention.
FIG. 17 is a schematic diagram of a plurality of sets of photoelectric data corresponding to a plurality of wavelengths in an embodiment of the invention.
Fig. 18 is a schematic diagram of processing of at least two optical signals in an embodiment of the invention.
FIG. 19 is a schematic diagram of extraction of a signal sub-sequence according to a reference signal in an embodiment of the invention.
FIG. 20 is a schematic diagram of a reaction curve in another embodiment of the invention.
FIG. 21 is a schematic diagram of a reaction curve in yet another embodiment of the invention.
FIG. 22 is a flow diagram of a method for acquiring a signal in a sample analyzer according to an embodiment of the invention.
FIG. 23 is a flow diagram of a method for controlling a sample analyzer according to an embodiment of the invention.
FIG. 24 is a flow diagram of a method for controlling a sample analyzer according to another embodiment of the invention.
FIG. 25 is a flow diagram of a method for controlling a sample analyzer according to yet another embodiment of the invention.

List of reference numerals: 310: sampling device; 311: suction nozzle; 320: reaction device; 321: reaction cup; 330: detection device; 331: light source; 332: optical signal acquisition component; 333: light splitting device; 334: analog-to-digital conversion component; 341: memory; 342: processor; 350: reagent dispensing device; 10: function module; 11: sample component; 12: sample dispensing mechanism; 13: reagent component; 14: reagent dispensing mechanism; 15: mixing mechanism; 16: reaction component; 17: detection device; 20: input module; 30: display module; 40: memory; 50: processor; 60: alarm module.

### DETAILED DESCRIPTION

Solutions in the embodiments of the invention will be described clearly and completely with reference to the accompanying drawings in the embodiments of the invention. It is apparent that the embodiments described herein are a part of the embodiments of the invention rather than all of the embodiments of the invention. All other embodiments obtained by a person of ordinary skill in the art based on the embodiments of the invention without creative efforts shall fall within the scope of protection of the invention.

In the description of the invention, unless otherwise expressly specified and limited, the terms "mounted", "communicated", and "connected" are to be understood in a broad sense, for example, either fixed or detachable or integrally connected; either mechanically or electrically connected; either directly connected or indirectly connected through an intermediate medium; or internally communicated within two elements. For those of ordinary skill in the art, the specific meanings of the above terms in the invention may be understood according to specific situations.

It should be understood that the terms used in the specification of the invention are solely for the purpose of describing specific embodiments and not intended to limit the invention. As used in the specification and the appended claims of the invention, nouns with the singular forms "a", "an" and "the" are intended to include the plural forms unless the context clearly indicates otherwise.

Some embodiments of the invention will be described in detail below with reference to the accompanying drawings. The following embodiments and features in the embodiments may be combined with each other without conflict.

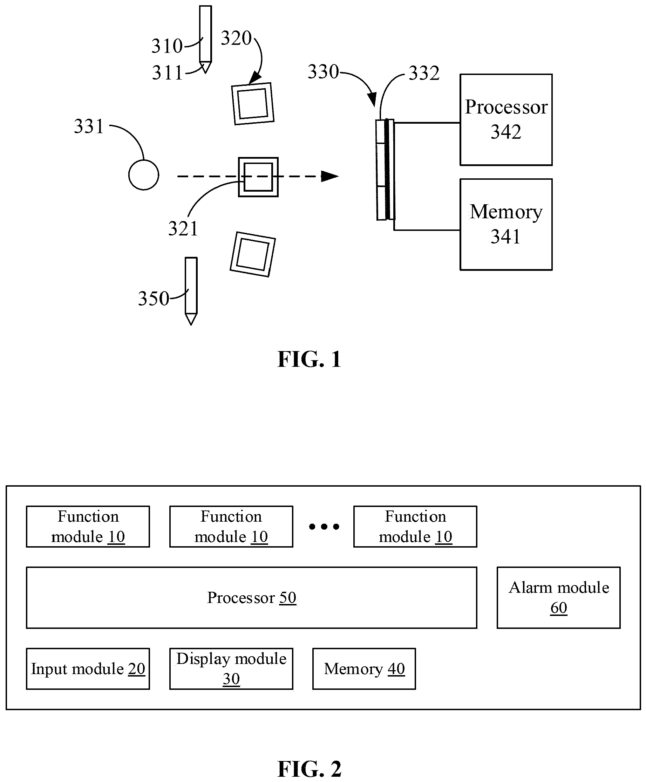

With reference to FIG. 1, FIG. 1 is a schematic structural diagram of a sample analyzer according to an embodiment of the invention.

The sample analyzer is a device for testing and analyzing a sample. In some implementations, the sample analyzer may include but is not limited to at least one of: a biochemical analyzer, an immunoassay analyzer, and a coagulation analyzer.

The structure of the sample analyzer in some implementations is illustrated before describing the invention in detail.

With reference to FIG. 2, an embodiment discloses a sample analyzer including at least one function module 10 (or one or more function modules 10), an input module 20, a display module 30, a memory 40, a processor 50, and an alarm module 60, which are described below respectively.

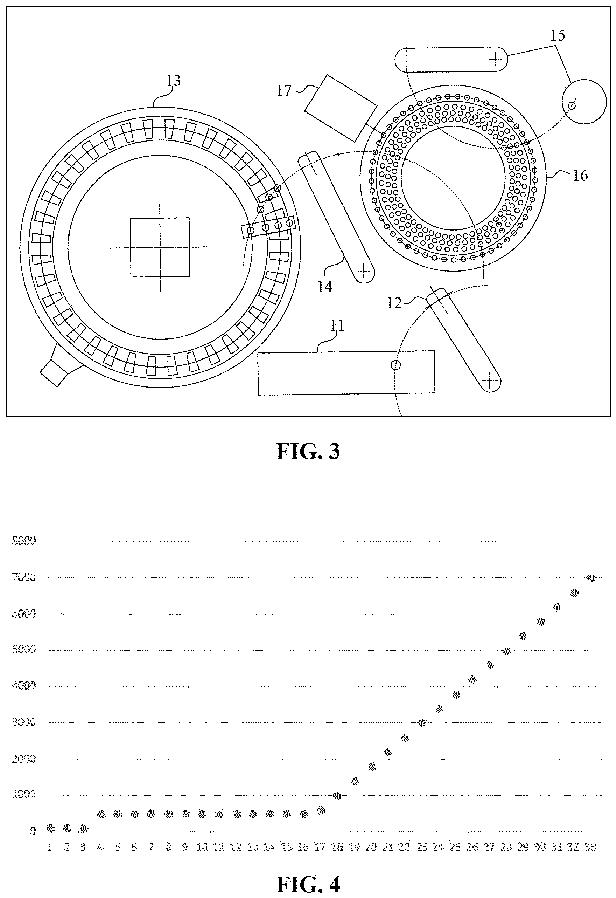

Each of the function modules 10 is configured to perform at least one function required in the sample analysis process, and these function modules 10 cooperate together to complete the sample analysis, to obtain a sample analysis result. FIG. 3 illustrates a sample analyzer in an embodiment, and the function module 10 is illustrated therein. For example, the function module 10 may include: a sample component 11, a sample dispensing mechanism 12, a reagent component 13, a reagent dispensing mechanism 14, a mixing mechanism 15, a reaction component 16, a detection device 17, and the like.

The sample component 11 is configured to carry samples. In some examples, the sample component 11 may include a Sample Delivery Module (SDM) and a front-end track. In other examples, the sample component 11 may also be a sample disk including a plurality of sample positions for placing, for example, sample tubes. The sample disk may schedule a sample to a corresponding position (such as a position for the sample dispensing mechanism 12 to aspirate the sample) by rotating its disc structure.

The sample dispensing mechanism 12 is configured to aspirate the sample and dispense the sample into the reaction cup to which the sample is to be added. For example, the sample dispensing mechanism 12 may include a sample probe, which is moved in a two-dimensional or three-dimensional space by a two-dimensional or three-dimensional driving mechanism, so that the sample probe may be moved to aspirate the sample carried in the sample component 11 and moved to the reaction cup to which the sample is to be added, and discharge the sample into the reaction cup.

The reagent component 13 is configured to carry reagents. In an embodiment, the reagent component 13 may be a reagent disk, and the reagent disk is arranged in a disc structure and has a plurality of positions for carrying reagent containers. The reagent component 13 may be rotated and drive the reagent containers carried therein to rotate to a certain position, for example, the position where the reagent is aspirated by the reagent dispensing mechanism 14. There may be one or more reagent components 13.

The reagent dispensing mechanism 14 is configured to aspirate the reagent and dispense the reagent into the reaction cup to which the reagent is to be added. In an embodiment, the reagent dispensing mechanism 14 may include a reagent probe, which is moved in a two-dimensional or three-dimensional space by a two-dimensional or three-dimensional driving mechanism, so that the reagent probe may be moved to aspirate the reagent carried in the reagent component 13 and moved to the reaction cup to which the reagent is to be added, and discharge the reagent into the reaction cup.

The mixing mechanism 15 is configured to mix a to-be-mixed reaction liquid in the reaction cup. There may be one or more mixing mechanisms 15.

The reaction component 16 has at least one placement position for placing the reaction cup and incubating the reaction liquid in the reaction cup. For example, the reaction component 16 may be a reaction disk, which is arranged in a disc structure and has one or more placement positions for placing the reaction cups. The reaction disk may be rotated and drive the reaction cup therein to rotate, to schedule the reaction cup in the reaction disk and incubate the reaction liquid in the reaction cup.

The detection device 17 is configured to optically detect the incubated reaction liquid to obtain reaction data of the sample. In an embodiment, the detection device 17 is separately arranged outside the reaction component 16.

The above describes some examples of the function module 10, and the following description will continue to explain other components and structures in the sample analyzer.

The input module 20 is configured to receive an input from a user. Generally, the input module 20 may be a mouse, a keyboard, etc., and in some cases may also be a touch screen that provides functions for the user to input and display content, so that the input module 20 and the display module 30 are integrated in this example. In some examples, the input module 20 may be a speech input device or the like that provides a speech recognition function.

The display module 30 may be configured to display information. In some embodiments, the sample analyzer itself may be integrated with a display module. In some embodiments, the sample analyzer may be connected to a computer device (such as a computer) to display information through a display unit of the computer device (e.g. a display screen). These manners all fall within the scope defined and protected by the display module 30 herein.

For ease of explanation, a biochemical analyzer is illustrated in the following description as an example of the sample analyzer.

Generally, the existing biochemical analyzer measures at least one of absorbance, transmittance and astigmatism of the liquid in the reaction cup during the reaction process to obtain a reaction curve, such as an absorbance reaction curve, and may obtain a corresponding measurement result according to information, such as an amplitude and change rate, of the reaction curve. Each point of data on the absorbance reaction curve represents an absorbance that can be obtained by performing photoelectric acquisition on the liquid (such as the reaction liquid) in the reaction cup with the detection device (such as a photometer) when the reaction cup moves relative to the photometer and processing a light intensity of the acquired data. FIG. 4 is a schematic diagram of an absorbance and a reaction curve obtained by performing photoelectric acquisition and processing on the reaction liquid in the reaction cup by a photometer in the related art. The reaction cup and the liquid in the reaction cup may rotate with the reaction disk, and may pass through the photometer at a regular interval. The photometer acquires the signal in each detection period corresponding to the regular interval, that is, acquires the light intensity signal of one point and processes the light intensity signal to obtain absorbance data of one point. The reaction cup and the liquid in the reaction cup may pass through the photometer several times with the rotation of the reaction disk, and the absorbance data of a plurality of points corresponding to a plurality of detection periods may be obtained. The absorbance data of the plurality of points may be combined to obtain the reaction curve.

The inventor of the invention found that the existing signal acquisition method only acquires the absorbance data at a certain position of the reaction cup when the reaction cup passes through the photometer. However, there may be abnormal interferences in the reaction cup or the liquid in the reaction cup, such as foreign matters (bubbles or solid foreign matters), uneven reaction liquid, stains, scratches, or residual water on the surface of the reaction cup, or electromagnetic interference affecting the signal of the reaction cup, and some interferences may tend to appear only in part of the reaction cup or part of the liquid in reaction cup. The photometer may align with the position of the reaction cup where the foreign matter is located when acquiring and processing the light intensity signal to obtain the absorbance data. In such situation, the obtained absorbance data cannot be used for effectively determining the actual state of the reaction cup and of the liquid in the reaction cup. Therefore, the accuracy of the measurement results obtained according to the absorbance data cannot be ensured.

Based on this finding, the inventor of the invention improves a sample analyzer and a method for acquiring signals in the sample analyzer, so that the sample analyzer and the method for acquiring signals in the sample analyzer can identify at least one abnormal condition in the reaction process.

As illustrated in FIG. 1, the sample analyzer in embodiments of the invention includes a sampling device 310, a reaction device 320, and a detection device 330. The detection device 330 includes a light source 331, an optical signal acquisition component 332, a memory 341, and a processor 342. The optical signal acquisition component 332 includes, for example, a photoelectric sensor. In some embodiments, the light source 331 and the optical signal acquisition component 332 may be a light source and a photoelectric sensor in a photometer, respectively.

Specifically, the sampling device 310 is configured to aspirate a sample from a sample container transported to a sampling position and to dispense the aspirated sample to a reaction cup 321. The sampling device 310 has a suction nozzle 311 configured to aspirate a predetermined volume of the sample from a sample tube transported to the sampling position and convey the sample to the reaction cup 321. The reaction device 320 includes a cup position for containing the reaction cup 321 in which the reagent and the sample are mixed to prepare a reaction liquid. It will be appreciated that the reaction device 320 is configured to incubate the sample added into the reaction cup 321, and prepare the reaction liquid from the reagent and the sample.

The reaction cup 321 moves relative to the detection device 330. Illustratively, the reaction cup 321 rotates relative to the detection device 330, for example, the reaction cup rotates around the light source component 331 of the detection device 330. During the relative movement, the light source 331 irradiates the irradiation light to the reaction cup 321. The process of continuous irradiation of the light source 331 on the reaction cup 321 in the relative movement constitutes a detection period. The optical signal acquisition component 332 acquires a plurality of signals of the reaction cup 321 during the detection period. The memory 341 stores intensities of the acquired signals and timings for acquiring the signals, to obtain a signal sequence, including corresponding relationships between the intensities and timings of the plurality of signals, of the reaction cup 321. The processor 342 processes the signal sequence.

In some embodiments, the sample analyzer further includes a reagent dispensing device 350 configured to dispense the reagent into the reaction cup.

When the reaction cup passes through the detection device of the sample analyzer, the light source irradiates the irradiation light from the light source to the reaction cup, and the optical signal acquisition component of the detection device acquires the signals of the reaction cup and of the liquid in the reaction cup, and stores the signal sequence obtained according to the intensities of the acquired signals and the timings for acquiring the signals for subsequent analysis and identification. In an example, the optical signal acquisition component is configured to acquire a full-time signal, the memory is configured to store the full-time signal acquired by the optical signal acquisition component, and the processor processes the acquired full-time signal and may also output an analysis result. The analysis result may include a testing result of the sample, and may also include a state of the reaction cup or of the liquid in the reaction cup, or a state of the detection device in the sample analyzer, which is not limited thereto.

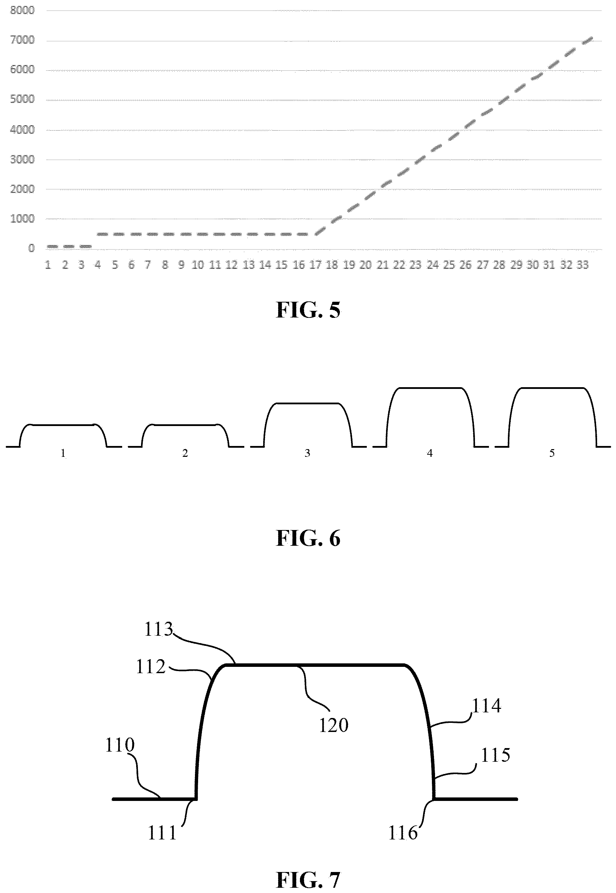

With reference to FIG. 5, the signal sequence composed of the corresponding relationships between the intensities and the timings of the plurality of signals may be obtained in each detection period of the reaction cup, and the signal sequence of each detection period may be referred to as a signal sequence segment or a full-time signal. In an example, the optical signal acquisition component acquires at least ten signals of the reaction cup in the detection period, and obtains the signal sequence including the corresponding relationships between the intensities and timings of the at least ten signals. Preferably, the optical signal acquisition component acquires at least fifty signals of the reaction cup in the detection period, and obtains the signal sequence including the corresponding relationships between the intensities and timings of the at least fifty signals, for example, at least fifty signals per short segment in FIG. 5.

Since one signal sequence is obtained by acquiring a plurality of signals of the reaction cup in each detection period, when there is an abnormal interference in the reaction cup or the liquid in the reaction cup, some of the signals in the signal sequence are acquired when the optical signal acquisition component is aligned with the position of the abnormal interference. The actual state of the reaction cup and of the liquid in the reaction cup may be determined according to the signal sequence, and an abnormality of the detection device may also be identified. Optional, a prediction as well as intervention may be made in time according to the identification result of the abnormality, to ensure the accuracy and reliability of testing results.

In some embodiments, at least two of the plurality of signals of the reaction cup, acquired by the optical signal acquisition component in the detection period, have the same wavelength. In an example, all the signals in the signal sequence obtained in one detection period have the same wavelength. For example, the signal sequence includes the corresponding relationships between the intensities and timings of the plurality of signals corresponding to the same wavelength. For example, when the light source irradiates the irradiation light to the reaction cup, one or more optical signal acquisition components corresponding to one or more wavelengths in the detection device each continuously acquires the full-time signal. Alternatively, for example, the optical signal acquisition components corresponding to a plurality of wavelengths in the detection device acquire signals at different times, and the signals acquired by the optical signal acquisition components corresponding to the plurality of wavelengths may be combined to form the full-time signal, to realize the full-time signal acquisition.

In some embodiments, the reaction cup moves relative to the light source and is continuously irradiated by the light source. The reaction cup passes through the light source many times. A duration of continuous irradiation on the reaction cup by the light source each time the reaction cup passes through the light source constitutes a detection period, and the reaction cup passes through the light source many times to form a plurality of detection periods. The optical signal acquisition component obtains a plurality of signal sequences of the reaction cup in the plurality of detection periods.

With reference to FIG. 6, when the reaction cup passes through the detection device periodically, the optical signal acquisition component acquires the optical signals generated by the reaction cup and/or the liquid in the reaction cup during the movement of the reaction cup relative to the light source in the detection device, to obtain a plurality of signal sequences corresponding to a plurality of continuous detection periods for the reaction cup. For example, the reaction cup periodically passes through the detection device five times, and then five signal sequences are generated, as illustrated in FIG. 6. A duration that each time the reaction cup passes through the detection device may be called a detection period, or a light acquiring point. In some implementations, the signal sequence may also be referred to as an optical signal pulse waveform, and the signal sequence may be a graph formed by a pulse and including information about intensities and timing of signals, or a data array including the corresponding relationships between the intensities and the timings of the signals.

In an example, the operation that the signal sequence is processed by the processor includes the following operation. The processor obtains a reaction curve of the sample based on the plurality of signal sequences, and obtains a testing result of the sample based on the reaction curve.

Optionally, the sample analyzer further includes a display component that displays the reaction curve of the sample. The reaction curve includes a plurality of segments, and each of the segments is determined according to the signal sequence corresponding to the respective detection period.

With reference to FIG. 5, in a complete reaction detection period of a sample, one reaction cup and the liquid in the reaction cup may pass through the detection device several times with the rotation of the reaction disk. A respective signal sequence corresponding to each detection period may be obtained by acquiring signals each time the reaction cup passing through the detection device, and a plurality of signal sequences corresponding to a plurality of detection periods may be obtained in response to the reaction cup passing through the detection device for many times. The reaction curve may be determined according to the plurality of signal sequences corresponding to the plurality of detection periods, for example, the reaction curve includes a plurality of short-line segments corresponding to the plurality of signal sequences. For example, the respective short-line segment corresponding to each signal sequence is determined according to a signal sub-sequence of the reaction cup in the signal sequence of each detection period. For each signal sequence, a single-point absorbance corresponding to the signal sequence is calculated by interpolation algorithm. Compared with acquiring the signal of one point in each detection period and determining the corresponding absorbance, the determination of the single-point absorbance according to the signal sequence can improve the accuracy of the absorbance obtained in each detection period. The reaction curve may be determined according to the absorbance of the plurality of detection periods, and the testing result of sample may be obtained according to information such as amplitude and change rate of the reaction curve.

The sample analyzer may further include a control device configured to, for example, control operations of each device in the sample analyzer according to the analysis result. The analysis result may include the testing result of the sample, and may also include the state of the reaction cup or of the liquid in the reaction cup, or the state of the detection device in the sample analyzer, which is not limited thereto.

In some embodiments, the operation of processing the signal sequence by the processor includes determining the state of the reaction cup or of the liquid in the reaction cup or the state of the detection device in the sample analyzer based on the signal sequence. The liquid in the reaction cup may be a reagent or a sample, and may also be a reaction liquid.

In an example, the state of the reaction cup or of the liquid in the reaction cup or the state of the detection device in the sample analyzer is determined based on a signal characteristic corresponding to the signal sequence. The signal characteristic corresponding to the signal sequence includes but is not limited to at least one of: boundary time points (such as a start time point and an end time point) of each sub-sequence in the signal sequence, a duration of each sub-sequence in the signal sequence, a characteristic value (such as a maximum value, a minimum value, an average value, etc.) of intensities of signals in each sub-sequence, a fluctuation of a sub-sequence, or a slope of the intensities of the signals in a sub-sequence.

In some implementations, with reference to FIG. 7, the signal sequence of the reaction cup in each detection period includes at least one signal sub-sequence. The signal sub-sequence includes a baseline signal sub-sequence 110 and a reaction cup signal 120.

The baseline signal sub-sequence 110 is composed of at least one signal acquired by the optical signal acquisition component when the reaction cup is not in the detection area of the optical signal acquisition component (that is, the signal acquired by the optical signal acquisition component does not across the reaction cup), and the baseline signal sub-sequence 110 may be called an external signal of the reaction cup. Value A of the baseline signal sub-sequence 110 may be determined according to the signal in the baseline signal sub-sequence 110, such as an intensity A of at least one signal in the baseline signal sub-sequence 110, and each reaction cup has its own value A of the baseline signal sub-sequence 110. Values of the baseline signal sub-sequences 110 obtained for the same reaction cup in different light acquiring periods, i.e., different detection periods, may be defined as A1, A2, A3,..., An in turn. For example, the values of the baseline signal sub-sequences 110 in five detection periods in FIG. 6 may be defined as A1 to A5 in turn.

The reaction cup signal 120 includes a signal sub-sequence acquired by the optical signal acquisition component when the reaction cup is in the detection area of the optical signal acquisition component. The characteristic waveform of the reaction cup signal 120 may be typical or irregular. In an example, the reaction cup signal 120 includes a rising edge signal sub-sequence 112, a reaction cup signal sub-sequence 113, and a falling edge signal sub-sequence 115. As illustrated in FIG. 7, a start time point of the reaction cup signal 120 is at point 111, followed by a rising edge signal sub-sequence 112 of the reaction cup signal 120. After the rising edge signal sub-sequence 112, the reaction cup signal sub-sequence 113 of the reaction cup signal 120 may keep stationary or sometimes fluctuate. Then, the falling edge signal sub-sequence 115 of the reaction cup signal 120 is followed, and point 116 is an end time point of the reaction cup signal 120.

When the reaction cup moves relative to the detection device, the optical signal acquisition component of the detection device firstly acquires the signal at one side of a cup wall of the reaction cup, and the acquired signal may be called the rising edge signal sub-sequence 112. Then, the optical signal acquisition component acquires a signal of a transparent surface of the reaction cup and the liquid in the reaction cup or a signal of an empty reaction cup, and the acquired signal may be called the reaction cup signal sub-sequence 113. Generally, the signal in the reaction cup signal sub-sequence 113 may have a relatively stable value, such as B. The value of the signal in the reaction cup signal sub-sequence 113 may be used for determining the value of the reaction cup signal 120, e.g., the value of the reaction cup signal 120 is determined to be B. Each reaction cup has its own value B of the reaction cup signal 120. Values of the reaction cup signals 120 obtained for the same reaction cup in different light acquiring periods, i.e., different detection periods, may be defined as B1, B2, B3,..., Bn in turn. For example, the values of the reaction cup signals 120 in five detection periods in FIG. 6 may be defined as B1 to B5 in turn. As the reaction cup continues to move relative to detection device, the optical signal acquisition component acquires a signal at another side of the cup wall of the reaction cup, and the acquired signal may be referred to as the falling edge signal sub-sequence 115.

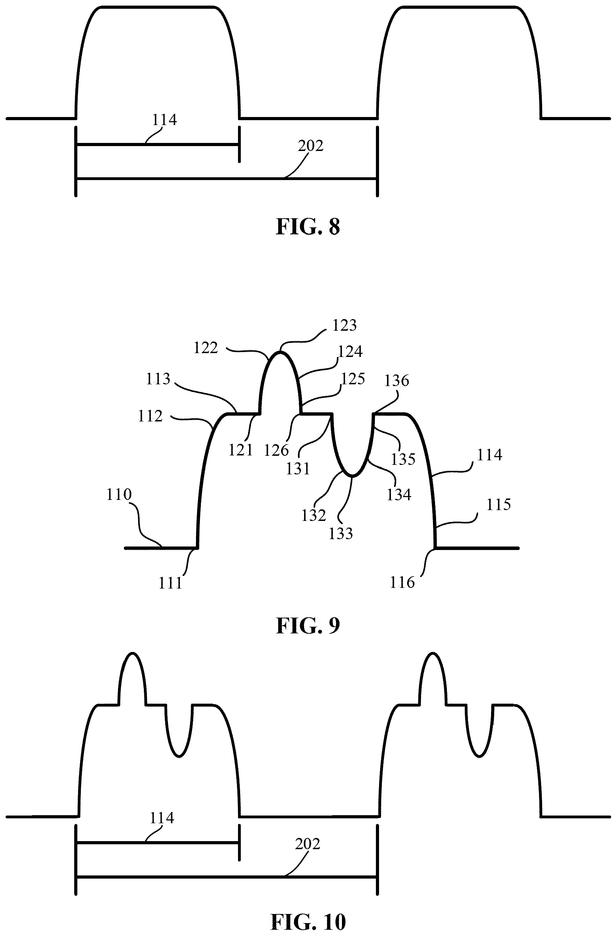

A wave width 114 of the reaction cup signal 120 may be determined according to a duration between two signal points of the reaction cup signal 120, and signal intensities at the two signal points are less than or equal to the value B of the reaction cup signal. For example, the wave width may be determined according to a duration between a timing when the signal intensity of the signal point in the rising edge signal sub-sequence 112 rises to a preset value and a timing when the signal intensity of the signal point in the falling edge signal sub-sequence 115 falls to the preset value, and the preset value is less than or equal to the value B of the reaction cup signal 120. Alternatively, as illustrated in FIG. 8, a duration between the start time point of the rising edge signal sub-sequence and the end time point of the falling edge signal sub-sequence may be determined as the wave width 114 of the reaction cup signal 120.

In an example, the signal characteristic corresponding to the signal sequence includes a duration of at least one signal sub-sequence and/or a boundary time point of at least one signal sub-sequence. The at least one signal sub-sequence may be the rising edge signal sub-sequence 112, the falling edge signal sub-sequence 115, or the reaction cup signal sub-sequence 113 which is located between the rising edge signal sub-sequence 112 and the falling edge signal sub-sequence 115. For example, the boundary time point of the rising edge signal sub-sequence 112 includes the start time point 111 of the reaction cup signal 120. The duration of the rising edge signal sub-sequence 112 may be referred to as a rising edge duration, the duration of the reaction cup signal sub-sequence 113 may be determined according to the wave width 114 of the reaction cup signal 120, the duration of the falling edge signal sub-sequence 115 may be referred to as a falling edge duration, and the boundary time point of the falling edge signal sub-sequence 115 may be the end time point 116 of the reaction cup signal 120.

In some implementations, the signal sequence acquired during each detection period may be applied to process an abnormal reaction process.

The reaction between the sample and the reagent may conform to a certain reaction kinetic principle. As the reaction time proceeds, the value A of the external signal of the reaction cup, i.e., the baseline signal sub-sequence 110, the value B of the reaction cup signal 120 or the signal characteristics of the reaction cup signal 120 may be compared with preset thresholds corresponding to these values, respectively, to determine whether the reaction process conforms to the law.

In an example, the processor determines that the optical signal acquisition component is abnormal in response to the signal in the baseline signal sub-sequence not satisfying a first preset condition. For example, the value A of the baseline signal sub-sequence is determined according to the intensity of at least one signal in the baseline signal sub-sequence, and when the value A of the baseline signal sub-sequence exceeds a preset range, the optical signal acquisition component is determined to be abnormal. For example, the abnormality of the optical signal acquisition component includes, but is not limited to, the fact that the optical signal acquisition component is affected by electromagnetic interference that affects measurement.

Taking a Triglyceride (TG) testing item as an example, in the reaction process, the external signal of the reaction cup, i.e., the baseline signal sub-sequence 110 is not involved in the detection of the reaction process of the reaction cup, and the value A of the baseline signal sub-sequence 110 may fluctuate in a small range, for example, the intensity A of each signal in the baseline signal sub-sequence 110 may be less than a threshold RA. Detection of the optical signal acquisition component is determined to be abnormal if the intensity A of a signal in the baseline signal sub-sequence 110 is greater than or equal to the threshold RA. For example, the sample analyzer may retest the sample according to a preset process or the sample analyzer may perform automatic maintenance or raise an alarm, when an abnormality occurs in the detection of the optical signal acquisition component.

In some implementations, the processor may compare signal sequences of a plurality of detection periods to determine whether the movement of the reaction cup relative to the detection device is abnormal. For example, the abnormality may include an unstable movement of the reaction disk. Different detection periods for the same reaction cup may be compared with each other or different detection periods for different reaction cups may be compared with each other.

In an example, the signal sequence of each detection period includes at least one signal sub-sequence, and the processor determines whether the relative movement of the reaction cup is abnormal in response to determining whether a change in the duration of the signal sub-sequence or a characteristic time point of the signal sub-sequence satisfies a second preset condition.

Optionally, the characteristic time point of the signal sub-sequence may include, but is not limited to, the boundary time point of the signal sub-sequence. For example, the characteristic time point may also be another time point at the same position in the signal sub-sequence.

Taking the TG testing item as an example, in the reaction process, signal characteristics related to the reaction cup signal may reflect whether the signals during the reaction process between the sample and the reagent are normal. The signal characteristics may include, for example, the start time point 111 of the reaction cup signal 120, the rising edge duration of the rising edge signal sub-sequence 112, the wave width 114 of the reaction cup signal 120, the falling edge duration of the falling edge signal sub-sequence 115, and the end time point 116 of the reaction cup signal 120. These signal characteristics may be used for monitoring the reaction process, for example, for determining whether the movement of the reaction cup relative to the detection device is abnormal, such as whether the movement of the reaction cup is a uniform motion.

In an example, the reaction cup is loaded on the reaction disk, and the reaction disk rotates at a relatively stable speed, so that the reaction cup rotates relative to the detection device, and the signals are acquired by the optical signal acquisition component. When the movement of reaction cup relative to the detection device is normal, for example, the movement of the reaction disk loaded with the reaction cup is normal (such as in a uniform motion), the difference between the durations of the same signal sub-sequence in different detection periods for the same reaction cup may be less than a threshold. When the difference between the durations of the signal sub-sequences in different detection periods for the same reaction cup is less than the threshold, the movement of the reaction cup relative to the detection device may be determined to be normal; when the difference between the durations of the signal sub-sequences in different detection periods is greater than the threshold, the movement of the reaction cup relative to the detection device may be determined to be abnormal. For example, when the movement of the reaction cup relative to the detection device is determined to be abnormal, the sample analyzer may raise an alarm and require inspection and maintenance.

For example, for the same reaction cup, when differences between the rising edge durations of the rising edge signal sub-sequences 112 in different detection periods are all less than a threshold b, the movement of the reaction cup relative to the detection device may be determined to be normal. When a difference between the rising edge durations in different detection periods is greater than the threshold b, the movement of the reaction cup relative to the detection device may be determined to be abnormal.

For example, for the same reaction cup, when differences between the wave widths 114 of the reaction cup signals 120 in different detection periods are all less than a threshold c, the movement of the reaction cup relative to the detection device may be determined to be normal. When a difference between the wave widths 114 of the reaction cup signals 120 in different detection periods is greater than the threshold c, the movement of the reaction cup relative to the detection device may be determined to be abnormal.

For example, for the same reaction cup, when differences between the falling edge durations of the falling edge signal sub-sequences 115 in different detection periods are all less than a threshold d, the movement of the reaction cup relative to the detection device may be determined to be normal. When a difference between the falling edge durations in different detection periods is greater than the threshold d, the movement of the reaction cup relative to the detection device may be determined to be abnormal.

For example, when the movement of reaction cup relative to the detection device is normal, for example, the movement of the reaction disk loaded with the reaction cup is normal (such as in a uniform motion), the difference between the boundary time points of the same signal sub-sequence in different detection periods for the same reaction cup may be less than a threshold. Optionally, a timer is reset to zero in each detection period and starts timing after being reset to zero, to obtain an acquiring timing of each signal in the signal sequence, and the acquiring timing includes the boundary time point of the signal sub-sequence. For example, the timer is reset to zero at the start time point of the reaction cup signal 120 in each detection period. When the movement of the reaction disk loaded with the reaction cup is normal (such as in a uniform motion), the difference between the boundary time points of the same signal sub-sequence may be less than a threshold. For the same reaction cup, when differences between the boundary time points of the signal sub-sequences in different detection periods are all less than the threshold, the movement of the reaction cup relative to the detection device may be determined to be normal. When a difference between the boundary time points of the signal sub-sequences in different detection periods is greater than the threshold, the movement of the reaction cup relative to the detection device may be determined to be abnormal.

For example, the start time points 111 of the reaction cup signals 120 for the same reaction cup are acquired in different detection periods, and the differences between the start time points 111 in different detection periods may be all less than the threshold a. For the same reaction cup, when the differences between the start time points 111 in different detection periods are all less than the threshold a, the movement of the reaction cup relative to the detection device may be determined to be normal. When a difference between the start time points 111 in different detection periods is greater than the threshold a, the movement of the reaction cup relative to the detection device may be determined to be abnormal.

For example, for the same reaction cup, when differences between the end time points 116 of the reaction cup signals 120 in different detection periods are all less than a threshold e, the movement of the reaction cup relative to the detection device may be determined to be normal. When a difference between the end time points 116 of the reaction cup signals 120 in different detection periods is greater than the threshold e, the movement of the reaction cup relative to the detection device may be determined to be abnormal.

The method for acquiring a full-time signal may obtain signal sequences of a plurality of different reaction cups. In addition to the aforementioned implementations which analyze and process the change in the signal sequence in the detection process of the same reaction cup, the signal sequences of the plurality of reaction cups in the reaction disk may also be processed to monitor a testing process of the sample analyzer.

In some implementations, the processor may compare signal sequences of a plurality of successive reaction cups that successively pass through the detection device. Whether the relative movements of the reaction cups are abnormal is determined in response to determining whether an interval of characteristic time points of the signal sub-sequences in two successive signal sequences, such as an interval of boundary time points, satisfies a third preset condition.

With reference to FIG. 8, when two adjacent reaction cups pass through the detection device of the sample analyzer in turn, the optical signal acquisition component of the detection device successively acquires the signals of the two reaction cups and of the liquid in the reaction cups, and stores the intensities and the timings corresponding to the intensities of the signals, to obtain two signal sequences for subsequent analysis and identification, as illustrated in FIG. 8. The wave width 114 of the reaction cup signal in each signal sequence may be referred to as an intra-cup width I, and a signal width 202 between specific positions of the signal sequences of the reaction cups may be referred to as an inter-cup width J. The inter-cup width J is, for example, an interval between the boundary time points of the same signal sub-sequence of two adjacent reaction cups, such as an interval between the start time points of the rising edge signal sub-sequences of two adjacent reaction cups.

In an example, the reaction cup is loaded on the reaction disk, the reaction disk rotates at a relatively stable speed, and the signals are acquired through the optical signal acquisition component. When the movement of reaction cup relative to the detection device is normal, for example, when the movement of the reaction disk loaded with the reaction cup is normal (such as in a uniform motion), the wave width 114 (the intra-cup width I) of the reaction cup signal in each signal sequence and the interval 202 (the inter-cup width J) between the boundary time points of the signal sub-sequences in two successive signal sequences may fluctuate within a respective preset range; otherwise, the movement of the reaction cup relative to the detection device may be determined to be abnormal, such as the abnormal working state of the reaction disk.

For example, when the intra-cup width I of a certain reaction cup exceeds a preset range [m1, n1], the relative movement of the reaction cup is determined to be abnormal, and the optical signal acquisition of the reaction cup is determined to be abnormal. For example, it may further be determined that the current test of the reaction cup is invalid and retesting is required.

For example, when intra-cup widths I of a plurality of reaction cups all exceed the preset range [m1, n1], the relative movements of the reaction cups may be determined to be abnormal, for example, the movement of the reaction disk is determined to be unstable, and inspection and maintenance of the analyzer may be prompted. Optionally, the optical signal acquisition of the plurality of reaction cups may be determined to be abnormal, and the current tests of the plurality of reaction cups may be determined to be invalid.

For example, when inter-cup widths J of a plurality of reaction cups all exceed the preset range [m2, n2], the relative movements of the reaction cups are determined to be abnormal, for example, the movement of the reaction disk is determined to be unstable, and the inspection and maintenance of the analyzer may be prompted.

In some implementations, the processor may compare signal sequences in a plurality of detection periods for the same reaction cup containing the liquid, to determine whether the reaction process of the liquid in the reaction cup is abnormal.

In an example, the processor may compare signal sequences in a plurality of detection periods for the same reaction cup containing the reaction liquid, to determine whether the reaction process of the reaction liquid is abnormal. FIG. 6 illustrates the signal sequences of the same reaction cup containing the reaction liquid in five detection periods, and each of the signal sequences includes at least one signal sub-sequence, such as at least one of a rising edge signal sub-sequence, a reaction cup signal sub-sequence and a falling edge signal sub-sequence.

In an example, the processor obtains a target signal intensity in each detection period from signals in the signal sub-sequence of the detection period, compares the target signal intensities in a plurality of detection periods to obtain a change parameter, and determines whether the reaction process is abnormal based on the obtained change parameter. For example, the processor determines whether the reaction process is abnormal in response to determining whether the change parameter of the target signal intensities in the plurality of detection periods satisfy a fifth preset condition.

For example, for the same reaction cup, when the reaction process is normal, the difference between the signal sub-sequences in different detection periods corresponding to different stages (or intervals) in a whole reaction testing period of a sample, such as the change parameter of the target signal intensities, satisfies a preset condition, such as being less than a threshold x or greater than a threshold y. As illustrated in FIG. 6, since only the reagent is added into the reaction cup and no sample is added in the first and second detection periods, the reaction is not initiated, and this stage may be called a no-sample-addition stage. A change parameter between the target signal intensity in the second detection period (such as the value B2 of the reaction cup signal sub-sequence) and the target signal intensity in the first detection period (such as the value B1 of the reaction cup signal sub-sequence) may be less than a threshold x. Since the reagent and sample have been added into the reaction cup to form a reaction liquid in the third and fourth detection periods after the second detection period, the reaction has been initiated. This stage may be called a sample reaction stage, and the intensity of the acquired signal is gradually increasing. The change parameter between the target signal intensity in the third detection period and the target signal intensity in the second detection period, and the change parameter between the target signal intensity in the fourth detection period and the target signal intensity in the third detection period may be greater than a threshold y. A reaction rate in the reaction cup tends to be stable after the fourth detection period, and this stage may be called a reaction end stage. The change parameter between the target signal intensity in the fifth detection period and the target signal intensity in the fourth detection period may be less than a threshold z.

For example, when the stage corresponding to the at least two detection periods is the no-sample-addition stage and the change parameter between the target signal intensities in the at least two detection periods is greater than the threshold x, the reaction process may be determined to be abnormal, and retest may be performed. When the stage corresponding to the at least two detection periods is the sample reaction stage and the change parameter between the target signal intensities in the at least two detection periods is less than the threshold y, the reaction process may be determined to be abnormal, and retest may be performed. When the stage corresponding to the at least two detection periods is the reaction end stage and the change parameter between the target signal intensities in the at least two detection periods is greater than the threshold z, the reaction process may be determined to be abnormal, and retest may be performed.

For example, when determining whether the reaction process is abnormal based on the obtained change parameter, a change parameter threshold corresponding to the sample reaction stage is determined for the sample reaction stage corresponding to the at least two detection periods, and whether the reaction process is abnormal is determined according to a comparison result between the change parameter of the target signal intensities in the at least two detection periods and the change parameter threshold.

In an example, if the reaction cup shows a same abnormality for a plurality of testing items, for example, the same abnormality occurs a number of times when the reaction cup is used to test different items or different samples, the reaction cup may be determined to be polluted or damaged, and the sample analyzer may perform automatic maintenance or raise an alarm.

For example, the reaction processes for two different testing items are performed in the same reaction cup and two reaction liquids are obtained respectively. The processor compares respective signal sequences corresponding to each of the two reaction liquids. If both the change parameters of the plurality of signal sequences corresponding to the two reaction liquids are abnormal in the same stage, for example, the processor compares the change parameter between the target signal intensities of each of the two reaction liquids, if both the change parameters between the target signal intensities of the two reaction liquids are abnormal in the same stage, it is indicated that the reaction cup is polluted or damaged. For example, if the reaction processes of two different testing items performed in the same reaction cup are both abnormal at the no-sample-addition stage, at the sample reaction stage or at the reaction end stage, it is indicated that the reaction cup is polluted or damaged.

With reference to FIG. 9 and FIG. 10, a sudden-change-in-signal characteristic may be present in the signal sequence in an abnormal detection period, and the sudden-change-in-signal characteristic includes a wave peak sub-sequence or a wave trough sub-sequence in a reaction cup signal sub-sequence.

For example, the wave peak sub-sequence and/or the wave trough sub-sequence may appear in the acquired reaction cup signal sub-sequence when there is an abnormality, for example, the presence of foreign matters in the reaction cup, the reaction cup being polluted or discolored, or the liquid in the reaction cup being abnormal, such as the presence of foreign matters in the liquid or unevenly mixing, or unstable light source or optical signal acquisition component.

As illustrated in FIG. 9, a wave peak sub-sequence 123 and/or a wave trough sub-sequence 133 may appear in the reaction cup signal sub-sequence 113.

In an example, when a signal in the reaction cup signal sub-sequence 113 fluctuates and a signal value of the fluctuated portion is greater than the value B of the reaction cup signal sub-sequence 113, the fluctuated portion is determined to be a wave peak sub-sequence 123. The peak value of the wave peak sub-sequence 123 may be defined as C. For example, the peak value C of the wave peak sub-sequence 123 is greater than a threshold Rc. If there are a plurality of wave peak sub-sequences, the values of the plurality of wave peak sub-sequences may be defined as C1, C2, C3, ... , Cn in turn. A characteristic waveform of the wave peak sub-sequence of reaction cup signal may be typical or irregular.

A start time point of the wave peak sub-sequence 123 may be represented as 121, and if there are a plurality of wave peak sub-sequences, there are a plurality of start time points 121 each corresponding to a respective one of the plurality of wave peak sub-sequences 123. A rising edge duration of the wave peak sub-sequence 123 is represented as 122, and if there are a plurality of wave peak sub-sequences, there are a plurality of rising edge durations each corresponding to a respective one of the plurality of wave peak sub-sequences. A falling edge duration of the wave peak sub-sequence 123 is represented as 125, and if there are a plurality of wave peak sub-sequences, there are a plurality of falling edge durations each corresponding to a respective one of the plurality of wave peak sub-sequences. An end time point of the wave peak sub-sequence 123 is represented as 126, and if there are a plurality of wave peak sub-sequences, there are a plurality of end time points each corresponding to a respective one of the plurality of wave peak sub-sequences.

A wave width 124 of the wave peak sub-sequence 123 may be determined by determining two signal points on the wave peak sub-sequence 123 whose values are less than or equal to the peak value C of the wave peak sub-sequence 123, and determining a duration between the two signal points on the wave peak sub-sequence 123 as the wave width 124 of the wave peak sub-sequence 123. That is, the wave width 124 of the wave peak sub-sequence 123 is a duration between signal points on the wave peak sub-sequence 123 whose values are less than or equal to the peak value C.

In an example, when a signal in the reaction cup signal sub-sequence 113 fluctuates and a signal value of the fluctuated portion is less than the value B of the reaction cup signal sub-sequence 113, the fluctuated portion is determined to be a wave trough sub-sequence 133. The value, e.g., the trough value of the wave trough sub-sequence 133 may be defined as D. For example, the trough value D of the wave trough sub-sequence 133 is less than a threshold Rd. If there are a plurality of wave trough sub-sequences, the values of the plurality of wave trough sub-sequences may be defined as D1, D2, D3, ... , Dn in turn. A characteristic waveform of the wave trough sub-sequence of the reaction cup signal may be typical or irregular.

A start time point of the wave trough sub-sequence 133 may be represented as 131, and if there are a plurality of wave trough sub-sequences, there are a plurality of start time points each corresponding to a respective one of the plurality of wave trough sub-sequences. A falling edge duration of the wave trough sub-sequence 133 is represented as 132, and if there are a plurality of wave trough sub-sequences, there are a plurality of falling edge durations each corresponding to a respective one of the plurality of wave trough sub-sequences. A rising edge duration of the wave trough sub-sequence 133 is represented as 135, and if there are a plurality of wave trough sub-sequences, there are a plurality of rising edge durations each corresponding to a respective one of the plurality of wave trough sub-sequences. An end time point of the wave trough sub-sequence 133 is represented as 136, and if there are a plurality of wave trough sub-sequences, there are a plurality of end time points each corresponding to a respective one of the plurality of wave trough sub-sequences.

A wave width 134 of the wave trough sub-sequence 133 may be determined by determining two signal points on the wave trough sub-sequence 133 whose values are greater than or equal to the trough value D of the wave trough sub-sequence 133, and determining a duration between the two signal points on the wave trough sub-sequence 133 as the wave width 134 of the wave trough sub-sequence 133. That is, the wave width 134 of the wave trough sub-sequence 133 is the duration between signal points on the wave trough sub-sequence 133 whose values are greater than or equal to the trough value D.

It can be understood that whether there is an abnormality may be determined according to the number of wave peak sub-sequences or wave trough sub-sequences in the signal sequences of the same reaction cup in a plurality of detection periods. For example, if the number of wave peak sub-sequences or wave trough sub-sequences for the same reaction cup in a plurality of detection periods is greater than a preset threshold, the reaction cup or the liquid in the reaction cup may be determined to be abnormal.

In some implementations, the processor may compare signal sequences of a plurality of detection periods to determine whether a same sudden-change-in-signal characteristic occurs at the same time period, and if so, the sudden-change-in-signal characteristic is determined as a state determination characteristic. The same sudden-change-in-signal characteristic may include substantially similar wave peak sub-sequences or wave trough sub-sequences, a similarity of the substantially similar wave peak sub-sequences is greater than or equal to a similarity threshold, and a similarity of the substantially similar wave trough sequences is greater than or equal to a similarity threshold. As illustrated in FIG. 10, the signal sequences in the two detection periods have substantially similar wave peak sub-sequences and wave trough sub-sequences at the same time period in the respective detection periods, and then the wave peak sub-sequence and/or wave trough sequence may be determined as the state determination characteristic.

In an example, the optical signal acquisition component of the detection device acquires signals at the same position of the reaction cup in the same time period of a plurality of detection periods. For example, if a difference between the start point times 121 (e.g. CS) of the wave peak sub-sequences 123 in a plurality of detection periods is less than a threshold Rcs and a difference between the end time points 126 (e.g. CE) is less than a threshold Rce, it may be determined that the wave peak sub-sequences 123 appear at the same time period in the plurality of detection periods, i.e., at the same position of the reaction cup. If a difference between the rising edge durations 122 (e.g. CH) of the wave peak sub-sequences 123 in a plurality of detection periods is less than a threshold Rch, a difference between the widths 124 (e.g. CL) of the wave peak sub-sequences 123 is less than a threshold Rcl, and a difference between the falling edge durations 125 (e.g. CD) of the wave peak sub-sequences 123 is less than a threshold Rcd, then the wave peak sub-sequences 123 in the plurality of detection periods may be determined as substantially similar wave peak sub-sequences, and the wave peak sub-sequences 123 in the plurality of detection periods may be determined as the state determination characteristics. For example, if a difference between the start point times 131 (e.g. DS) of the wave trough sub-sequences 133 in a plurality of detection periods is less than a threshold Rds and a difference between the end time points 136 (e.g. DE) of the wave trough sub-sequences 133 is less than a threshold Rde, it may be determined that the wave trough sub-sequences 133 appear at the same time period in the plurality of detection periods, i.e., at the same position of the reaction cup. If a difference between the falling edge durations 132 (e.g. DD) of the wave trough sub-sequences 133 in a plurality of detection periods is less than a threshold Rdd, a difference between the widths 134 (e.g. DL) of the wave trough sub-sequences 133 is less than a threshold Rdl, and a difference between the rising edge durations 135 (e.g. DH) of the wave trough sub-sequences 133 is less than a threshold Rdh, then the wave trough sub-sequences 133 in the plurality of detection periods may be determined as substantially similar wave trough sub-sequences, and the wave trough sub-sequences 133 in the plurality of detection periods may be determined as the state determination characteristics.

Further determination may be performed according to the same sudden-change-in-signal characteristic of the signal sequences in the same time period of different detection periods, for example, the wave peak sub-sequences 123 at the same position acquired at different times and/or the wave trough sub-sequences 133 at the same position acquired at different times. For example, the processor may further count the number of occurrences of the state determination characteristic in a plurality of detection periods for the same reaction cup to obtain a statistical number, compare the statistical number with a statistical threshold and determine a state of the reaction cup or of the liquid in the reaction cup or a state of the detection device in the sample analyzer.

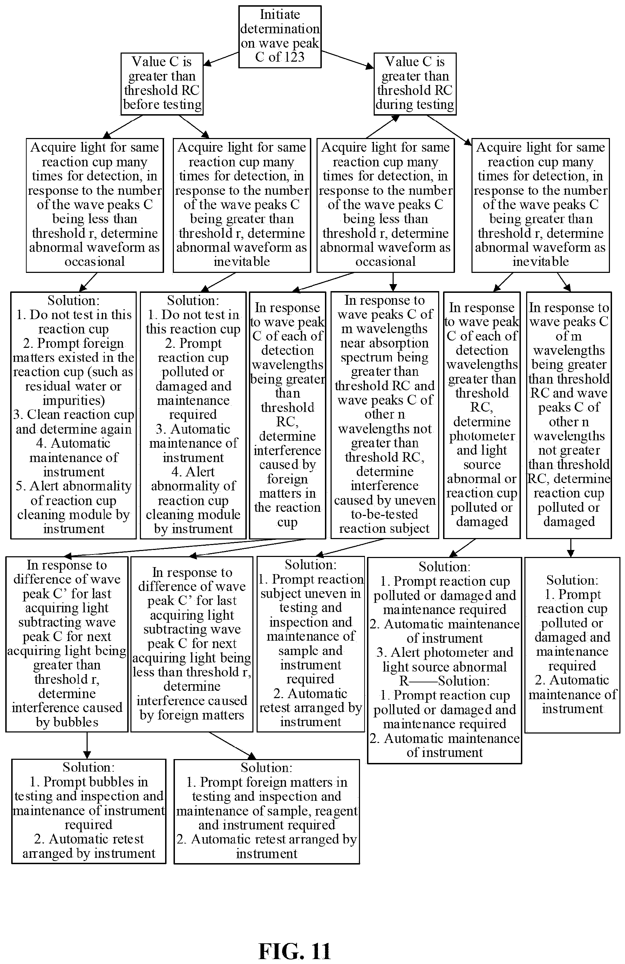

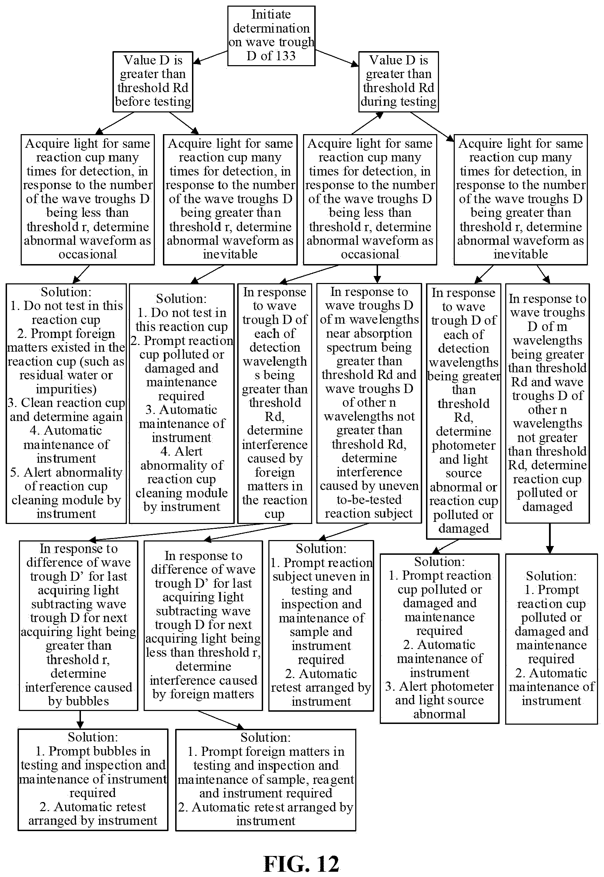

With reference to FIG. 11 and FIG. 12, for example, when the number of occurrences of the state determination characteristic for the same reaction cup is greater than the statistical threshold, the state determination characteristic may be determined as an inevitable state determination characteristic, and the reaction cup or the detection device may be determined to be abnormal. The abnormal state of the reaction cup includes the reaction cup being polluted or damaged (such as having dirt or scratch) or the reaction cup being discolored, etc., and the abnormal state of the detection device includes the light source or optical signal acquisition component being abnormal, etc. When the number of occurrences of the state determination characteristic for the same reaction cup is less than or equal to the statistical threshold, the state determination characteristic may be determined as an occasional state determination characteristic, and the reaction liquid is determined to be abnormal, such as foreign matters (such as lipid particulate matter) being existed in the liquid in the reaction cup or uneven mixing of the liquid in the reaction cup, or foreign matters being existed in the reaction cup.

In some implementations, when testing a sample, a reagent may be firstly added into the reaction cup, then the sample may be added into the reaction cup, and the sample and reagent may be mixed to form a reaction liquid. Optionally, when there is only reagent in the reaction cup, the state of the reagent in the reaction cup, such as a PH value of the reagent, may be obtained according to the signal sequence or the absorbance or transmittance obtained from the signal sequence. Whether the reagent is abnormal, such as an opening time of the reagent bottle being too long, the reagent being expired or the reagent being deteriorated, etc., may be determined according to the obtained reagent state. Optionally, when the reagent has not been added into the reaction cup, the state of the reaction cup, such as whether there is scratch on the reaction cup, whether cleanliness of the reaction cup satisfies a standard or whether the liquid is residual in the reaction cup, may be determined according to the signal sequence. Optionally, the liquid in the reaction cup may be a reaction liquid prepared from the reagent and the sample, and whether the reaction liquid is abnormal may be determined based on the signal sequence or the absorbance or transmittance obtained from the signal sequence. The liquid is not limited thereto, for example, the liquid in the reaction cup may also be the reagent, the sample, and a cleaning liquid in a cleaning process of the reaction cup, and an abnormality in the cleaning process of the reaction cup may also be detected.

In an example, the processor compares signal sequences in a plurality of different detection periods for the same reaction cup, and the signal sequences are signal sequences obtained before the sample and/or reagent are added into the reaction cup. If the statistical number of the state determination characteristics (such as the wave peak sub-sequences or wave trough sub-sequences) before adding the sample and/or reagent into the reaction cup is less than or equal to the statistical threshold, it is indicated that there are foreign matters in the reaction cup, such as residual water or impurities (such as dust, paper scraps, etc.); if the statistic number of the state determination characteristics is greater than the statistic threshold, it may be determined and indicated that the reaction cup is polluted or damaged, such as the scratch on the reaction cup. Optionally, if the statistical number of the state determination characteristics for the same reaction cup before the sample and/or reagent is added into the reaction cup is less than or equal to the statistical threshold, that is, the state determination characteristic is occasional, the sample analyzer may be controlled to clean the reaction cup. Alternatively, for example, when it is determined that the wave peak sub-sequence 123 and/or the wave trough sub-sequence 133 appears on the signal sequence of the reaction cup before the sample and/or reagent is added into the reaction cup, the reaction cup may not be tested, or automatic maintenance of the analyzer may be performed, or an abnormality of a reaction cup cleaning module is alerted.

In an example, the processor may further compare signal sequences in a plurality of different detection periods for the same reaction cup, and the signal sequences are signal sequences after the sample and/or reagent is added into the reaction cup. For example, after the sample and/or reagent is added into the reaction cup, when the number of occurrences of the state determination characteristic for the same reaction cup is greater than the statistical threshold, the state determination characteristic may be determined as an inevitable state determination characteristic, and the reaction cup or the detection device may be determined to be abnormal. The abnormality of the reaction cup includes the reaction cup being polluted or damaged (such as having dirt or scratch) or the reaction cup being discolored, etc., and the abnormal state of the detection device includes the light source or optical signal acquisition component being abnormal, etc. After the sample and/or reagent is added into the reaction cup, when the number of occurrences of the state determination characteristic for the same reaction cup is less than or equal to the statistical threshold, the state determination characteristic may be determined as an occasional state determination characteristic, and the liquid in the reaction cup is determined to be abnormal, such as the foreign matters being existed in the liquid or the uneven mixing of the liquid, or foreign matters being existed in the reaction cup.

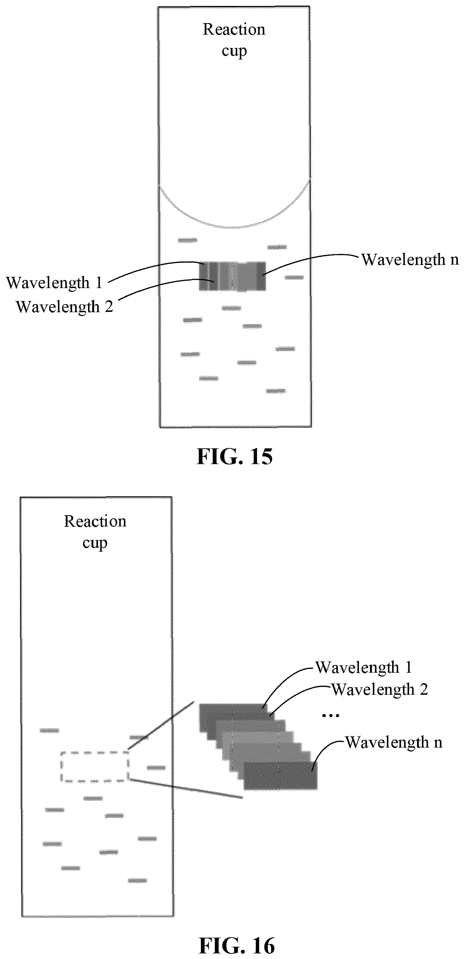

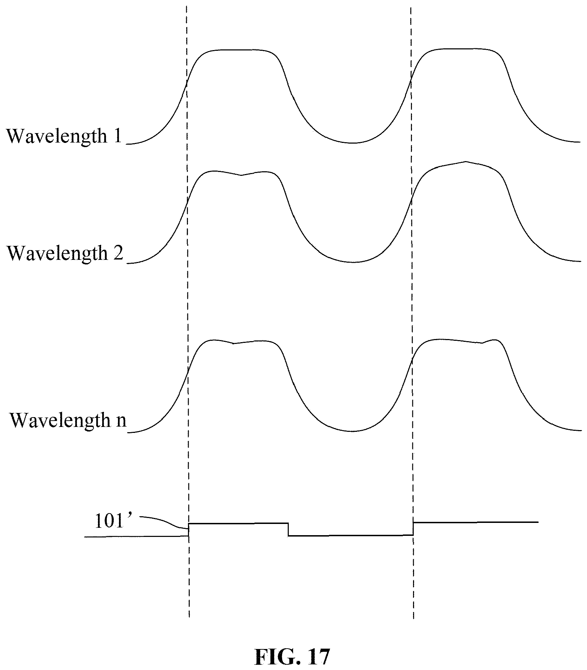

In some implementations, a plurality of detection wavelengths, such as 8, 12 or 16 detection wavelengths, etc. may be applied to the sample analyzer such as a biochemical analyzer. For example, as illustrated in FIG. 16 and FIG. 17, during continuous irradiation on the same reaction cup by the light source component, n sets of photoelectric data (or called signal sequences) corresponding to n wavelengths are obtained by performing parallel acquisition and parallel analog-to-digital conversion on signals in one or more detection periods (such as two detection periods as illustrated in FIG. 17). Each set of photoelectric data corresponding to each of the wavelengths includes signal sequences in one or more detection periods, and the signal sequence in each detection period includes corresponding relationships between intensities of at least two signals and timings for acquiring the at least two signals corresponding to the wavelength. Optionally, the respective signal sequence corresponding to each wavelength may be called a wavelength sub-sequence. For example, the detection device acquires full-time photoelectric data corresponding to a plurality of wavelengths in one or more detection periods of the reaction cup and obtains signal sequences corresponding to the plurality of wavelengths as illustrated in FIG. 17. In some implementations, the signal sequence may also be referred to as an optical signal pulse waveform. The signal sequence may be a graph formed by a pulse and including information about intensities and timings of signals, or a data array including the corresponding relationships between the intensities and the timings of the signals.

It can be understood that different wavelengths have different sensitivities when detecting different liquids, and state monitoring may be performed according to the plurality sets of photoelectric data corresponding to the plurality of wavelengths.

For example, if the signal sequences corresponding to all of the wavelengths in the same detection period for the same reaction cup show the same abnormality, such as the occurrence of the wave peak sub-sequence or wave trough sub-sequence, it may be indicated that there are foreign matters in the reaction cup, or there are scratches in the reaction cup, or the light source or the optical signal acquisition component is abnormal. The instrument maintenance may be controlled to be performed or the alarm information may be sent to the user, or the retest may be arranged automatically. Optionally, a change of the wave peak sub-sequences or wave trough sub-sequences in different detection periods may be further analyzed to determine whether the foreign matters in the reaction cup are bubbles or solid foreign matters. For example, when the wave peak sub-sequences appear in signal sequences of a plurality of detection periods at each wavelength, and a difference between the value C of the wave peak sub-sequence in the previous detection period and the value C of the wave peak sub-sequence in the subsequent detection period is greater than or equal to a preset threshold r, it may be determined and indicated that there are bubbles in the reaction liquid. When the difference between the value C of the wave peak sub-sequence in the previous detection period and the value C of the wave peak sub-sequence in the subsequent detection period is less than the preset threshold r, it may be determined and indicated that there are solid foreign matters in the reaction liquid. For example, when the wave trough sub-sequences appear in signal sequences of a plurality of detection periods at each wavelength, and a difference between the value D of the wave trough sub-sequence in the previous detection period and the value D of the wave trough sub-sequence in the subsequent detection period is greater than or equal to a preset threshold r, it may be determined and indicated that there are bubbles in the reaction liquid. When the difference between the value D of the wave trough sub-sequence in the previous detection period and the value D of the wave trough sub-sequence in the subsequent detection period is less than the preset threshold r, it may be determined and indicated that there are solid foreign matters in the reaction liquid.

For example, if a part of the signal sequences in the same detection period for the same reaction cup show the same abnormality, for example, the signal sequence corresponding to a certain wavelength (such as a main wavelength) or the signal sequences corresponding to the certain wavelength and several wavelengths near the wavelength show the abnormality of the wave peak sub-sequence or the wave trough sub-sequence, while there is no same abnormality at the same position of the signal sequences corresponding to other wavelengths, then it may be determined and indicated that the liquid to be detected in the reaction liquid is unevenly mixed. The instrument maintenance may also be controlled to be performed, or it may be prompted that the liquid (which may be the reagent or reaction liquid) in the reaction cup is uneven, or retested may also be arranged automatically.

In some implementations, the processor may perform state monitoring based on the at least two sets of photoelectric data respectively corresponding to at least two wavelengths. In an example, whether the state determination characteristic appears in the signal sequence corresponding to each of the wavelengths may be determined. The invention is not limited thereto.

In an example, the processor compares the signal sequences in a plurality of detection periods for the same reaction cup to obtain the number of occurrences of the sudden-change-in-signal characteristic in the signal sequences in the plurality of detection periods for the same reaction cup. Specifically, the number of occurrences of the sudden-change-in-signal characteristic corresponding to one or a plurality of wavelengths may be obtained. When the number of occurrences of the sudden-change-in-signal characteristic in the signal sequences in the plurality of detection periods for the same reaction cup is larger than a preset statistical threshold and the sudden-change-in-signal characteristic appears in the signal sequence corresponding to each of the wavelengths, i.e., each of the wavelength sub-sequences of the reaction cup, it may be indicated that the detection device is abnormal (such as the optical signal acquisition component or the light source is abnormal) or the reaction cup is polluted and damaged. When the number of occurrences of the sudden-change-in-signal characteristic in the signal sequences in the plurality of detection periods for the same reaction cup is greater than the preset statistical threshold and the sudden-change-in-signal characteristic appears in the signal sequences corresponding to a part of the wavelengths, i.e., partial wavelength sub-sequences of the reaction cup, it may be indicated that the reaction cup is discolored.

In an example, the processor compares signal sequences in a plurality of detection periods for the same reaction cup, and the signal sequences are signal sequences obtained after the sample and/or reagent is added into the reaction cup. The processor obtains the number of occurrences of the state determination characteristics in the signal sequences in the plurality of detection periods. Specifically, the processor may obtain the number of occurrences of the state determination characteristic corresponding to one or a plurality of wavelengths, to obtain the statistical number of the state determination characteristics. When the number of occurrences of the state determination characteristic for the same reaction cup, i.e., the statistical number, is greater than the statistical threshold and the state determination characteristic appears in each of the wavelength sub-sequences, it may be indicated that the detection device is abnormal (such as the optical signal acquisition component or the light source is abnormal) or the reaction cup is polluted and damaged. When the number of occurrences of the state determination characteristic for the same reaction cup is greater than the preset statistical threshold, and the state determination characteristic appears in a part of the wavelength sub-sequences, it may be indicated that the reaction cup is discolored. Optionally, when the number of occurrences of the state determination characteristic for the same reaction cup is greater than the statistical threshold, it may also be indicated that the analyzer requires maintenance and/or the analyzer may automatically perform the maintenance process.

In an example, the processor compares the signal sequences in a plurality of detection periods for the same reaction cup to obtain the number of occurrences of the sudden-change-in-signal characteristic in the signal sequences in the plurality of detection periods for the same reaction cup. Specifically, the number of occurrences of the sudden-change-in-signal characteristic corresponding to one or a plurality of wavelengths may be obtained. When the number of occurrences of the sudden-change-in-signal characteristic in the signal sequences in the plurality of detection periods for the same reaction cup is less than or equal to a preset statistical threshold and the sudden-change-in-signal characteristic appears in the signal sequence corresponding to each of the wavelengths, i.e., each of the wavelength sub-sequences for the reaction cup, it may be indicated that there are foreign matters in the liquid in the reaction cup (such as the reaction liquid). When the number of occurrences of the sudden-change-in-signal characteristic in the signal sequences in the plurality of detection periods for the same reaction cup is less than or equal to the preset statistical threshold and the sudden-change-in-signal characteristic appears in the signal sequences corresponding to a part of the wavelengths, i.e., a part of the wavelength sub-sequences for the reaction cup, it may be determined and indicated that the reaction liquid is unevenly mixed.

In an example, the processor compares signal sequences in a plurality of detection periods for the same reaction cup, and the signal sequences are signal sequences after the sample and/or reagent is added into the reaction cup. The processor obtains the number of occurrences of the state determination characteristic in the signal sequences in the plurality of detection periods. Specifically, the processor may obtain the number of occurrences of the state determination characteristic corresponding to one or a plurality of wavelengths, to obtain the statistical number of the state determination characteristics. When the number of occurrences of the state determination characteristic for the same reaction cup, i.e., the statistical number, is less than or equal to the statistical threshold and the state determination characteristic appears in each of the wavelength sub-sequences, it may be indicated that there are foreign matters in the liquid in the reaction cup (such as the reaction liquid). When the number of occurrences of the state determination characteristic for the same reaction cup, i.e., the statistical number, is less than or equal to the statistical threshold, and the state determination characteristic appears in a part of the wavelength sub-sequences, it may be determined and indicated that the reaction liquid is unevenly mixed. Optionally, it may also be indicated that the sample and the analyzer require inspection and maintenance, and/or retest may also be automatically arranged.

In an example, the processor compares a plurality of signal sequences for a plurality of reaction cups, counts the number of occurrences of the sudden-change-in-signal characteristic, and obtains the statistical number of the sudden-change-in-signal characteristics. Specifically, the processor obtains the number of occurrences of the sudden-change-in-signal characteristic in the signal sequences in one or more detection periods for each reaction cup, or obtains the number of occurrences of the sudden-change-in-signal characteristic in the signal sequences corresponding to one or more wavelengths for each reaction cup. For example, the number of occurrences of the sudden-change-in-signal characteristic in the signal sequences corresponding to respective wavelengths in a plurality of detection periods for each reaction cup may be obtained, to obtain the statistical number of the characteristics. If the statistical number is greater than the statistical threshold, the detection device is determined to be abnormal, for example, the light source or the optical signal acquisition component is abnormal.

In an example, the processor compares a plurality of signal sequences for a plurality of reaction cups, and the signal sequences are signal sequences after the sample and/or reagent is added into the reaction cup. The processor counts the number of occurrences of the state determination characteristic to obtain the statistical number of the state determination characteristics. Specifically, the number of occurrences of the state determination characteristic in the signal sequences in one or more detection periods for each reaction cup may be obtained, or the number of occurrences of the state determination characteristic in the signal sequences corresponding to one or more wavelengths for each reaction cup may be obtained. For example, the number of occurrences of the state determination characteristic in the signal sequences corresponding to respective wavelengths in a plurality of detection periods for each reaction cup may be obtained, to obtain the statistical number of the state determination characteristics. If the statistical number is greater than the statistical threshold, the detection device is determined to be abnormal, for example, the light source or the optical signal acquisition component is abnormal. For example, the light source or optical signal acquisition component may be determined to be unstable when the wave peak sub-sequence or the wave trough sub-sequence appears in the signal sequences acquired in the reaction processes of the samples and reagents of a number of consecutive reaction cups. For example, during continuous testing, when the signal sequences of a plurality of reaction cups fluctuate regularly, it is determined that the state of the light source light and the optical signal acquisition component is abnormal. For example, when the signal sequences of a plurality of consecutive reaction cups all show the wave peak sub-sequence 123 whose value C is greater than the threshold Rc or the wave trough sub-sequence 133 whose value D is less than the threshold Rd, it may be determined that the optical signal acquisition corresponding to these reaction cups is normal, for example, the light source and the optical signal acquisition component are determined to be unstable. It may also be determined that the current tests of these reaction cups are invalid, and the analyzer may raise an alarm and may also prompt that the light source needs to be replaced or the optical signal acquisition component needs to be inspected and repaired.

For example, the processor compares a plurality of signal sequences of a plurality of reaction cups, for example, compares the signal sequences in respective detection periods of a plurality of consecutive reaction cups, counts the number of occurrences of the state determination characteristic, and determines that the light source is abnormal if the statistical number is greater than the statistical threshold and the difference between sudden-change-in-signal amplitudes corresponding to the state determination characteristics in the signal sequences of the adjacent two reaction cups satisfies a fourth preset condition. The sudden-change-in-signal amplitude corresponding to the state determination characteristic may include the value C of the wave peak sub-sequence 123 or the value D of the wave trough sub-sequence 133. For example, when the signal sequences of the plurality of consecutive reaction cups all show the wave peak sub-sequence 123 whose value C is greater than the threshold Rc and a difference between the values C of the wave peak sub-sequences 123 in the signal sequences of two adjacent reaction cups is less than a threshold x; or, when the signal sequences of the plurality of consecutive reaction cups all show the wave trough sub-sequence 133 whose value D is less than the threshold Rc and a difference between the values D of the wave trough sub-sequences 133 in the signal sequences of two adjacent reaction cups is less than a threshold y, it may be determined that the optical signal acquisition corresponding to these reaction cups is abnormal and the light source is unstable. It may also be determined that the current tests of these reaction cups are invalid, and the analyzer may raises an alarm and may also prompt that the light source needs to be replaced.

In some implementations, the detection device is provided with a code disc to provide a reference signal, and the optical signal acquisition component starts signal acquisition of the reaction cup according to the reference signal and acquires a signal sequence. The acquired signal sequence includes at least two signals. Additionally or alternatively, the memory stores the signal sequence according to the reference signal. For example, a photoelectric code disc with the number of teeth equal to the number of reaction cups is installed under the reaction disk, and each jumping edge of a code tooth signal is aligned with one side of the corresponding reaction cup through assembling and debugging. The jumping edge of the code tooth signal is generated when the reaction cup moves to the detection device. With reference to FIG. 17, each generated code tooth jumping 101' may be monitored as the reaction disk rotates, and signal acquisition for the corresponding reaction cup may be initiated according to each code tooth jumping 101'. Because the optical signal acquisition component acquires a plurality of signals of the reaction cup in one detection period, the edge of the code tooth signal of the photoelectric code disc does not need to be aligned with the specific position (such as the center) of each reaction cup accurately, but only needs to be located before the center of the reaction cup, so that the acquired signal sequence contains the signal from the center of the reaction cup, and difficulty of parts processing, assembling and debugging can be greatly reduced. For example, the edge of the code tooth signal of the photoelectric code disc only needs to play the role of determining the same reaction cup. The respective signal sequence corresponding to each wavelength is processed by identifying signal characteristics corresponding to the signal sequence with an algorithm, such as a peak value, a trough value, a pulse start point, a pulse end point, a pulse width, a half peak width, a specific width, an area, a slope, a rising edge duration, and a falling duration, to determine the testing result of the sample and/or determine the state of the reaction cup or of the liquid in the reaction cup or the state of the detection device in the sample analyzer. In some embodiments, the devices, such as an opto-coupler and code disc, that generate the edge of the code teeth signal of the photoelectric code disc may also be eliminated. The signal value for the calculation result may be obtained only through signal processing including, such as acquisition of the signal sequence during the whole process when the reaction cup passes through the light source and waveform alignment, thereby saving hardware cost and debugging time. In other implementations, a desired signal, such as at least part of the signals in the reaction cup signal sub-sequence, may be extracted from the signal sequence according to the edge of the code tooth signal of the photoelectric code disc.

In some implementations, during continuous relative movement of a plurality of reaction cups relative to the detection device, the optical signal acquisition component continuously acquires signal sequences of the plurality of different reaction cups, and the memory continuously stores the signal sequences of the plurality of reaction cups. In an example, the plurality of different reaction cups are placed on the reaction disk and the reaction disk may rotate and drive the plurality of different reaction cups to rotate. The plurality of different reaction cups pass through the detection device respectively when rotating, so that the optical signal acquisition component acquires the signal sequences of the plurality of different reaction cups. In an example, since the optical signal acquisition component continuously acquires the signal sequences of the plurality of different reaction cups, it is not necessary for the detection device to have a code disc, for example, the signal sequences of the reaction cups may be acquired by the optical signal acquisition component as long as the reaction cups continuously moving relative to the detection device. In an example, the signal sequences of the respective reaction cups may be determined, based on the baseline signal sub-sequence 110, from the signal sequences acquired by the optical signal acquisition component. Alternatively, the signal sequences of the respective reaction cups may be determined from the signal sequences acquired by the optical signal acquisition component based on at least one of: the rising edge signal sub-sequence 112, the reaction cup signal sub-sequence 113, and the falling edge signal sub-sequence 115 of the reaction cup signal 120.

In some implementations, a plurality of detection wavelengths, such as 8, 12 or 16 detection wavelengths, etc. may be applied to the sample analyzer such as a biochemical analyzer. In an example, the light source component generates irradiation light(s), the irradiation light(s) irradiates(irradiate) a same position of a reaction cup or of a liquid in the reaction cup, the irradiation light is emitted to form at least two optical signals after irradiating the reaction cup, and the wavelengths of the at least two optical signals are different from each other.

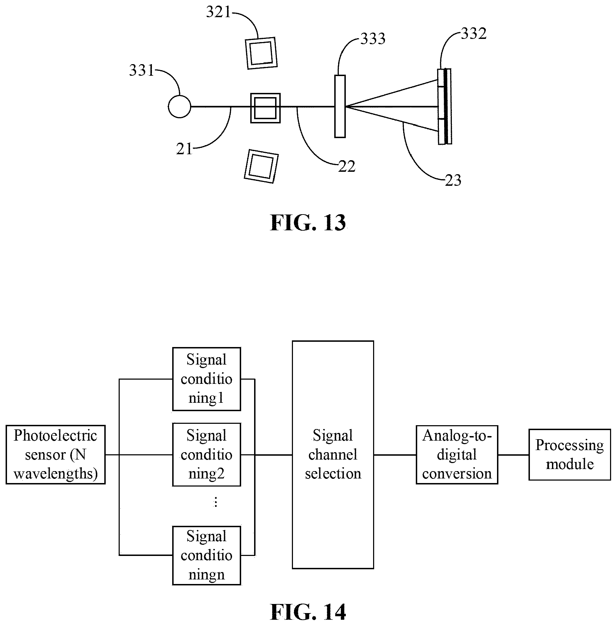

In an example, the irradiation light irradiates the reaction cup or the liquid in the reaction cup, and forms an emitting light after being transmitted, scattered and/or reflected by the reaction cup or the liquid in the reaction cup. As illustrated in FIG. 13, the irradiation light 21 irradiates the reaction cup 321 or the liquid in the reaction cup, and forms the emitting light after being transmitted and/or scattered by the reaction cup 321 or the liquid in the reaction cup. The optical signal acquisition component 332 and a light source component 331 are disposed on different sides of the reaction cup 321. Optionally, when the optical signal acquisition component 332 acquires an emitting light formed by the irradiation light after being reflecting by the reaction cup or the liquid in the reaction cup, that is, an optical signal reflected by the reaction cup or the liquid in the reaction cup, the optical signal acquisition component 332 and the light source component 331 may be disposed on the same side of the reaction cup 321.

In some implementations, the irradiation lights irradiate the same position of reaction cup or of the liquid in reaction cup simultaneously, and at least two light signals are acquired simultaneously. Alternatively, irradiation lights with different wavelengths may irradiate the same position of the reaction cup or of the liquid in the reaction cup at different times.

In an example, FIG. 13 is a schematic diagram of an optical path between the light source component 331 and the optical signal acquisition component 332. Optionally, the sample analyzer further includes a light splitting device 333 which splits the light emitted from the reaction cup 321 into optical signals 23 corresponding to at least two wavelengths. The light source component 331 irradiates the reaction cup 321 through a light 21 with mixed wavelengths (such as a white light), the light 21 with mixed wavelengths is transmitted and/or scattered by the reaction cup 321 to form an emitting light 22, and the emitting light 22 is split by the light splitting device 333 to form at least two optical signals 23 with different wavelengths. The optical signal acquisition component 332 may acquire the at least two optical signals 23, for example, the optical signal acquisition component 332 includes a photoelectric sensor. The light splitting device 333 splits the light emitted from the reaction cup 321 into at least two light signals 23 with different wavelengths. The light splitting device 333 may be referred to as a post light splitting device, and at least two irradiation lights with the at least two wavelengths irradiate the same position of the reaction cup or of the liquid in the reaction cup simultaneously.

For example, the light source may be a point light source or a light source array with a plurality of point light sources arranged along a vertical axis of the reaction cup. When the light source array moves relative to a horizontal axis of the reaction cup, the acquired signals represent two-dimensional signals of the reaction cup and/or of the liquid in the reaction cup, and the acquired information are richer. The reaction process can be better controlled by analyzing these data, and an abnormal state can be identified more accurately and/or more abnormal state can be identified. It will be understood that the light source component may include, in addition to the light source, an optical member that changes the light transmission path such that the irradiation light of the light source irradiates the reaction cup. For example, the light source component may include a single light source configured to emit the white light.

In other implementations, the reaction cup rotates relative to the light source component, and the light source component is a light source array capable of emitting light signals with different wavelengths. For example, light sources in the light source array are arranged along the moving direction of the reaction cup, the reaction cup passes through each of point light sources in the light source array in turn, and the wavelengths of the point light sources are different from one another. Because the light sources in the light source array are arranged along the moving direction of the reaction cup, the same position in the reaction cup may be irradiated by the light sources with different wavelengths in turn. In other words, the irradiation lights with different wavelengths irradiate the reaction cup or the liquid in the reaction cup at different irradiation times.

In other examples, the sample analyzer further includes a light splitting device configured to split the irradiation light generated by the light source component into irradiation lights with at least two wavelengths, the irradiation lights with at least two wavelengths irradiate the same position of the reaction cup or of the liquid in the reaction cup simultaneously, and at least two optical signals with different wavelengths are formed after the irradiation lights with at least two wavelengths irradiate the reaction cup. The light splitting device may be called a front light splitting device. For example, the light splitting device splits the irradiation light generated by the light source component into the irradiation lights with at least two wavelengths, and the irradiation lights with at least two wavelengths irradiate the same position of the reaction cup or of the liquid in the reaction cup at different angles. The irradiation lights with at least two wavelengths irradiate the reaction cup to form the at least two light signals with different emitting directions, then the emitting lights, i.e., light signals, from the reaction cup or from the liquid in the reaction cup may be acquired by a plurality of signal acquisition components. Alternatively, a device for adjusting a light transmission direction, such as a light convergence device, may be arranged at the light emitting side to transmit the light to the same signal acquisition component for acquisition.

In other embodiments, the light source component includes at least two light sources, the irradiation lights generated from the at least two light sources have different wavelengths and irradiate the same position of the reaction cup or of the liquid in the reaction cup simultaneously. The light source component may be provided with a plurality of light sources, and the irradiation lights of the plurality of light sources have different wavelengths and different emitting directions. The lights from various light sources converge at the same position of the reaction cup or of the liquid in the reaction cup and are emitted from different directions to form at least two light signals. The lights, i.e., the light signals, emitted from the reaction cup or from the liquid in the reaction cup may be acquired by a plurality of signal acquisition components. Alternatively, the device for adjusting a light transmission direction, such as the light convergence device, may be arranged at the light emitting side to transmit the lights to the same signal acquisition component for acquisition.

Optionally, the front light splitting device may also split the irradiation light generated by the light source component into irradiation lights with at least two wavelengths, and the irradiation lights with at least two wavelengths irradiate the same position of a reaction cup or of a liquid in the reaction cup in parallel. The irradiation lights with at least two wavelengths may be emitted from the same position of the reaction cup after irradiating the reaction cup, to form at least two light signals. Optionally, when the reaction cup rotates, the reaction cup passes through each of the irradiation lights with various wavelengths in turn, and the same position of the reaction cup may be irradiated by the irradiation lights with different wavelengths in turn, that is, the irradiation lights with different wavelengths irradiate the reaction cup or the liquid in the reaction cup at different times. The signal acquisition component may acquire at least two optical signals and process the at least two optical signals to obtain at least two sets of photoelectric data.

The optical signal acquisition component 332 may acquire the at least two optical signals 23 corresponding to different wavelengths.

In the process of detecting the liquid in the reaction cup, the reaction cup may pass through the detection device regularly. In the related art, the signals corresponding to a plurality of wavelengths are detected at different times when the reaction cup passes through the optical signal acquisition component once. Specifically, a duration during which the reaction cup passes through the detection device is segmented into time periods according to the number of the wavelengths, and a signal corresponding to a certain wavelength is acquired in each time period. A block diagram of an acquisition circuit to which the multi-wavelength photoelectric data acquisition method applies is illustrated in FIG. 14. In this acquisition circuit, signal conditionings in a plurality of channels enter a signal channel selection, to select one signal to go through analog-to-digital conversion. Due to the large amount of photoelectric data, a relatively low-cost circuit is used for realizing multi-wavelength detection in the related art. FIG. 15 illustrates acquisition of signals corresponding to different wavelengths from the sample added in the reaction cup in different time periods, each small block represents a detection position corresponding to a wavelength, and the detection positions corresponding to different wavelengths are different from one another. It is a problem that the detection signals corresponding to a plurality of wavelengths at the same time or at the same time period cannot be obtained simultaneously, and it is impossible to compare the signals corresponding to the plurality of wavelengths at the same time or at the same time period to process abnormalities, which is prone to generate abnormal results.

The inventor of the invention further improves the multi-wavelength photoelectric data acquisition method. The light source component of the sample analyzer is controlled to generate irradiation light(s), and the irradiation light(s) irradiates(irradiate) the same position of a reaction cup or of the liquid in the reaction cup. At least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup, and the wavelengths of the at least two optical signals are different from each other. At least two optical signals are processed to obtain at least two sets of photoelectric data.

As illustrated in FIG. 16 and FIG. 17, optical signals corresponding to a plurality of different wavelengths may be acquired simultaneously and may be processed to obtain a plurality of sets of photoelectric data corresponding to the plurality of wavelengths, and the plurality of wavelengths are detected at the same location and for the same time period. When the reaction cup passes through the light source component, the duration during which the reaction cup passes through the light source component is no longer segmented into time periods according to the number of wavelengths, in which a signal of a specific wavelength is acquired at each time period. In contrast, the signals corresponding to the plurality of wavelengths are acquired in parallel at the same time, and the plurality of wavelengths are detected at the same location and for the same time period. The advantage of the solution is that the plurality of sets of photoelectric data corresponding to the plurality of wavelengths at the same position in the same time period may be obtained simultaneously, and the plurality of sets of photoelectric data corresponding to the plurality of wavelengths may be referenced to one another.

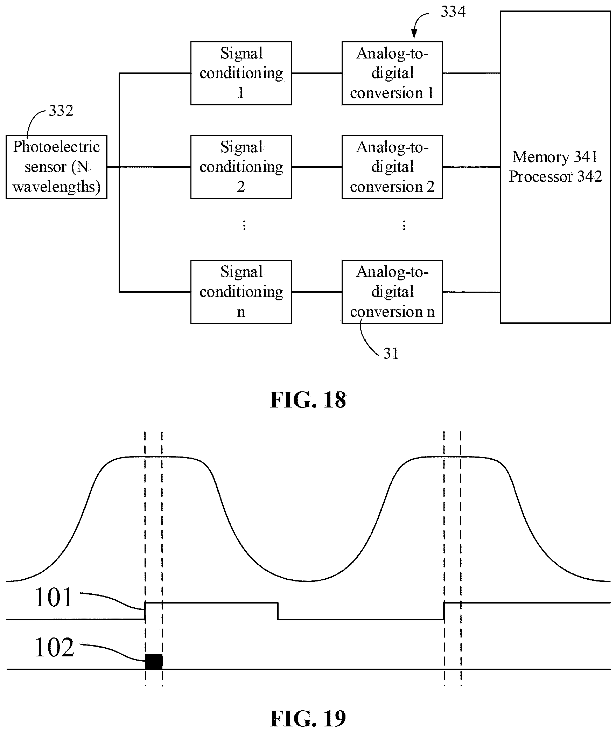

In some implementations, with reference to FIG. 13 and FIG. 18, a detection device includes a light source component 331, an optical signal acquisition component 332, and an analog-to-digital conversion component 334. The light source component 331 generates irradiation lights, the irradiation lights irradiate a same position of a reaction cup 321 simultaneously, and the reaction cup 321 rotates relative to the light source component 331. The optical signal acquisition component 332 acquires at least two optical signals simultaneously, the at least two optical signals are produced by a light emitted from the same position of the reaction cup after the irradiation light(s) irradiates(irradiate) the reaction cup, and the wavelengths of the at least two optical signals are different from each other. The analog-to-digital conversion component 334 performs analog-to-digital conversion on the at least two optical signals in parallel to obtain at least two sets of photoelectric data. Each set of photoelectric data is a signal sequence resulted from corresponding relationships between intensities of signals and timings for acquiring the signals. The at least two sets of photoelectric data acquired during continuous irradiation on the same reaction cup 321 by the light source component 331 include signal sequences corresponding to at least two wavelengths, and the signal sequence corresponding to a single wavelength includes the corresponding relationships between intensities of at least two signals and timings for acquiring the at least two signals.

In other implementations, the light source component 331 may emit irradiation lights with different wavelengths at different times. For example, the light source component 331 switches the wavelength of the irradiation light periodically. For example, the light source component 331 may include a light source integrated with a plurality of spectrum signal sources and the spectrum of the irradiation light may be switched. When the reaction cup 321 reaches the detection device, the reaction cup may remain stationary, the light source component 331 irradiates the irradiation lights with different wavelengths at different times, and the optical signal acquisition component 332 acquires optical signals corresponding to respective wavelengths at corresponding times, so as to acquire the optical signals corresponding to a plurality of different wavelengths, and to process the optical signals to obtain the plurality of sets of photoelectric data corresponding to the plurality of wavelengths. The detection positions of the lights with the plurality of wavelengths are also the same, and the plurality of sets of photoelectric data corresponding to the plurality of wavelengths at the same position may be obtained. The plurality of sets of photoelectric data corresponding to the plurality of wavelengths may be referenced to one another.

Optionally, the sample analyzer further includes a light splitting device 333 configured to split a light emitted from the reaction cup 321 into the at least two optical signals with the at least two wavelengths.

In the implementation, the operation of selecting an optical signal acquisition channel is omitted, a signal channel corresponding to each wavelength has an independent signal acquisition channel, and each independent signal acquisition channel has a respective photoelectric sensor and a respective analog-to-digital conversion function. Those skilled in the art will understand that the signal channel corresponding to each wavelength may correspond to a respective analog-to-digital conversion device. Alternatively, a plurality of signal channels may correspond to a common analog-to-digital device, as long as the signal in the signal channel corresponding to each wavelength can be independently analog-to-digital converted. Since the signal channel corresponding to each wavelength has its own analog-to-digital conversion capability, the plurality of sets of photoelectric data corresponding to the plurality of wavelengths may be acquired at the same time.

In some implementations, the reaction cup moves relative to the light source component, for example, the reaction cup rotates around the light source component. Each set of photoelectric data is a signal sequence resulted from the corresponding relationships between intensities of signals and timings for acquiring the signals. Specifically, the at least two sets of photoelectric data acquired during the continuous irradiation on the reaction cup by the light source component include signal sequences corresponding to at least two wavelengths, and the signal sequence corresponding to a single wavelength includes the corresponding relationships between intensities of at least two signals and the timings for acquiring the at least two signals. For example, the signal sequence of a single wavelength in one detection period includes the corresponding relationships between the intensities and timings of at least 10 signals. Preferably, the signal sequence of the single wavelength in one detection period includes the corresponding relationships between the intensities and timings of at least 50 signals. With reference to FIG. 7, the signal sequence of the single wavelength in one detection period includes at least one signal sub-sequence, e.g. a rising edge signal sub-sequence 112, a reaction cup signal sub-sequence 113, a falling edge signal sub-sequence 115, and may also include a baseline signal sub-sequence 110.

As illustrated in FIG. 16 and FIG. 17, during the continuous irradiation on the reaction cup by the light source component, n sets of photoelectric data corresponding to n wavelengths are obtained by parallel acquisition and parallel analog-to-digital conversion of signals in one or more detection periods (such as two detection periods as illustrated in FIG. 17). Each set of photoelectric data corresponding to a respective one of the wavelengths includes signal sequences of one or more detection periods, and the signal sequence in each detection period includes the corresponding relationships between intensities of at least two signals and timings for acquiring the at least two signals corresponding to the wavelength.

In an example, the reaction device includes a reaction disk, a driving device, and at least two reaction positions in which the reaction cups are placed. The driving device drives the reaction disk to rotate, such that the reaction cup moves relative to the detection device. For example, when the reaction cup moves relative to the light source, a plurality of sets of photoelectric data corresponding to a plurality of wavelengths at a plurality of times (positions) are continuously acquired, which can greatly improve the amount of the photoelectric data, and can accurately acquire the signals of the reaction cup and/or the whole reaction process for subsequent calculation and analysis. Since the amount of data for photoelectric data acquisition and analysis in the implementation is much larger than that of the segmented acquisition method in the related art, the hardware is required to have stronger capability on digital processing. Those skilled in the art will appreciate that the signal conditioning function in the circuit block diagram of FIG. 18 may not be implemented on a hardware board by means of components, but may be implemented in a processing module in a digital manner.

The processor may be configured to process the at least two sets of photoelectric data respectively corresponding to at least two wavelengths to obtain a processing result. The manner for obtaining the processing result may include, but is not limited to, at least one of: performing state monitoring according to the at least two sets of photoelectric data corresponding to the at least two wavelengths, or obtaining a testing result of the liquid in the reaction cup according to the at least two sets of photoelectric data corresponding to the at least two wavelengths.

For example, as illustrated in FIG. 17, all signals, such as signal intensity, are continuously acquired for each of the wavelengths during one or more detection periods. In an example, the signals corresponding to each of the plurality of wavelengths are continuously acquired in parallel by the detection device, and intensities of these signals and timings for acquiring these signals are continuously stored to obtain a signal sequence. The signal sequence may indicate a change in a full-time optical signal of the reaction cup and/or the liquid in the reaction cup, and an abnormality during the whole process of the sample detection may be determined according to the change in the optical signal.

In some implementations, the processor may perform state monitoring by using the at least two sets of photoelectric data respectively corresponding to at least two wavelengths. The state monitoring includes monitoring the state of at least one of: the liquid in the reaction cup, the reaction cup and the detection device of the sample analyzer.

In an example, the state of the reaction cup or of the liquid in the reaction cup or the state of the detection device in the sample analyzer is determined based on the signal sequences corresponding to the at least two wavelengths. For example, the state of the reaction cup or of the liquid in the reaction cup or the state of the detection device in the sample analyzer is determined based on a signal sequence corresponding to at least one wavelength in the signal sequences corresponding to the at least two wavelengths. For example, in response to a signal in a baseline signal sub-sequence of the signal sequence corresponding to the at least one wavelength not satisfying a first preset condition, the optical signal acquisition component may be determined to be abnormal. In an example, the signal sequences corresponding to the at least one wavelength in a plurality of detection periods are compared to determine whether the movement of the reaction cup relative to the detection device is abnormal. In an example, the signal sequences corresponding to the at least one wavelength in a plurality of detection periods for the same reaction cup containing the reaction liquid are compared to determine whether the reaction process of the reaction liquid is abnormal. In an example, the signal sequences corresponding to the at least one wavelength in a plurality of detection periods are compared to determine whether the same sudden-change-in-signal characteristic occurs in the same time period. If the same sudden-change-in-signal characteristic occurs in the same time period, the sudden-change-in-signal characteristic is determined as a state determination characteristic, the number of occurrences of the state determination characteristic is counted to determine a statistical number, and the statistical number is compared with a statistical threshold to determine the state of the reaction cup or of the liquid in the reaction cup or the state of the detection device in the sample analyzer.

In an example, whether there is an abnormality may be determined by using a signal sequence resulted from the corresponding relationships between the intensities of the signals and the timings for acquiring the signals in the photoelectric data. For example, the reaction cup or the liquid in the reaction cup may be determined to be abnormal when an abnormal change occurs in the signal sequence. Alternatively, absorbance or transmittance may be obtained from the photoelectric data, and the absorbance or transmittance may be compared with the absorbance or transmittance corresponding to the liquid in the reaction cup, to determine whether there is an abnormality according to the comparison result. The absorbance or transmittance corresponding to the liquid in the reaction cup is associated with the type of the liquid in the reaction cup.

In an example, a signal characteristic for identifying the abnormality may be extracted from the set of photoelectric data corresponding to each wavelength. The signal characteristic may be, for example, a peak value, a trough value, a pulse start point, a pulse end point, a pulse width, a half peak width, a specific width, an area, a slope, a rising edge duration or a falling edge duration of a signal curve of the signal sequence corresponding to each wavelength. The state of the reaction cup or of the liquid in the reaction cup or the state of the detection device in the sample analyzer is determined based on the signal characteristic of the signal curve of the signal sequence corresponding to at least one wavelength, so that the reaction process may be monitored better and the accuracy and precision of testing results may be guaranteed.

For example, in the process of monitoring the reaction cup or the liquid in the reaction cup, whether there is an abnormality may be determined by comparing the photoelectric data corresponding to the same wavelength in adjacent detection periods. With reference to FIG. 8, whether the relative movement between the reaction cup and the detection device is abnormal may be determined according to two signal sequences obtained when two adjacent reaction cups pass through the detection device of the sample analyzer in turn. Alternatively, as illustrated in FIG. 6, whether the reaction process of the reaction liquid is abnormal may be determined according to the signal sequences of the same reaction cup containing the reaction liquid in adjacent detection periods.

For example, in the process of monitoring the reaction cup or the liquid in the reaction cup, whether there is an abnormality may be determined by comparing the sets of photoelectric data corresponding to different wavelengths in the same detection period of the reaction disk. For example, the abnormality is determined when a difference between the sets of photoelectric data corresponding to different wavelengths in the same detection period exceeds a preset difference. Alternatively, whether the number of wave peak sub-sequences or wave trough sub-sequences in each set of photoelectric data corresponding to a respective one of the wavelengths is greater than a preset threshold is determined based on the sets of photoelectric data corresponding to different wavelengths in the same detection period, and when the number of the wave peak sub-sequences or wave trough sub-sequences in the set of photoelectric data corresponding to each of multiple wavelengths, the number of which is greater than a preset number, is all greater than the preset threshold, an abnormality is determined.

In an example, the operation that the state monitoring is performed by using the at least two sets of photoelectric data includes the following operations. A target testing item of the liquid in the reaction cup irradiated by the light source component or a type of the liquid in the reaction cup irradiated by the light source component is acquired. A target wavelength is determined according to the target testing item or the type of the liquid, and the target wavelength may also be called a main wavelength. The state monitoring is performed by using a set of photoelectric data corresponding to the target wavelength. The target testing item may be a current testing item for the sample added in the reaction cup, and the type of the liquid may be a reagent, a sample, a reaction liquid, a cleaning liquid, etc.

In some implementations, a set of photoelectric data used for the state monitoring may be selected for each detection period, namely, each detection period corresponds to one or more main wavelengths. The sets of photoelectric data corresponding to main wavelengths in different periods may be compared, and a state monitoring result of the sample analyzer may be determined according to the comparison result. It should be noted that the main wavelengths corresponding to different sets of photoelectric data in different detection periods may be the same or different. Alternatively, the different sets of photoelectric data in different detection periods for the same wavelength may be compared, to determine whether there is an abnormality according to the comparison result. It can be understood that one testing item or one detection period may correspond to at least one main wavelength and at least one secondary wavelength.

Since a certain wavelength or a wavelength in a certain range may be sensitive to certain testing items or certain types of liquid testing items, for example, some wavelengths are effective for detecting lipid particles, the certain wavelength or a wavelength in the certain range may be selected as the target wavelength, and the state monitoring may be performed by using a set of photoelectric data corresponding to the target wavelength. The monitoring result of the state monitoring for the sample analyzer can be more accurate by selecting different target wavelengths for different target testing items or different types of the liquid.

In an example, the operation that the state monitoring is performed by using the at least two sets of photoelectric data includes the following operations. The liquid in the reaction cup is determined to be abnormal when the set of photoelectric data corresponding to the target wavelength is abnormal. Optionally, the abnormality in the set of photoelectric data includes, but is not limited to, at least one of the following conditions. A duration of a signal sub-sequence in the signal sequence or a change in a characteristic time point of the signal sub-sequence does not satisfy a second preset condition; a signal of a baseline signal sub-sequence does not satisfy a first preset condition; an interval between boundary time points of signal sub-sequences in two consecutive signal sequences does not satisfy a third preset condition; a difference between sudden-change-in-signal amplitudes corresponding to state determination characteristics in signal sequences of two adjacent reaction cups of a plurality of reaction cups satisfies a fourth preset condition; a change parameter of target signal intensities corresponding to signal sequences in a plurality of detection periods for the same reaction cup containing the liquid does not satisfy a fifth preset condition; or a signal sequence shows a sudden-change-in-signal characteristic or the signal sequences in a plurality of the detection periods show a same sudden-change-in-signal characteristic at the same time period. For example, a light intensity value of the set of photoelectric data corresponding to the target wavelength may be compared with a light intensity value of at least one set of photoelectric data corresponding to at least one wavelength other than the target wavelength to determine whether the magnitude relationship satisfies a sixth preset condition, and if the magnitude relationship does not satisfy the sixth preset condition, the set of photoelectric data corresponding to the target wavelength is determined to be abnormal.

For example, with reference to FIG. 6, the signal sequences corresponding to the target wavelength in a plurality of detection periods for the same reaction cup containing the liquid are compared, to determine whether the set of photoelectric data corresponding to the target wavelength is abnormal. It is determined that the liquid in the reaction cup is abnormal when the set of photoelectric data is abnormal, for example, the reaction process of the sample and the reagent is abnormal, or the reagent is expired, or the particle matters are existed in the liquid (such as lipid particulate matter in the reaction liquid). Alternatively, the signal sequences corresponding to the target wavelength in a plurality of detection periods for the same reaction cup containing the liquid may be compared, to determine whether there is the same sudden-change-in-signal characteristic at the same time period in different detection periods. If there is the same sudden-change-in-signal characteristic at the same time period in different detection periods, the sudden-change-in-signal characteristic is determined as a state determination characteristic, the number of occurrences of the state determination characteristics is counted to determine a statistical number, and when the statistical number is less than or equal to a statistical threshold, the liquid in the reaction cup may be determined to be abnormal, for example, bubbles, solid foreign matters are existed in the liquid, or the liquid is uneven.

In an example, the operation that the state monitoring is performed by using the at least two sets of photoelectric data includes the following operations. It is determined that the reaction cup is polluted or damaged, the foreign matters are existed in the reaction cup, the foreign matters are existed in the liquid in the reaction cup, or the detection device of the sample analyzer is abnormal, when the sets of photoelectric data corresponding to all of the wavelengths are abnormal. For example, when the reaction cup is polluted or damaged (such as dirty or scratched), the foreign matters are existed in the reaction cup, the foreign matters are existed in the liquid in the reaction cup, or the light source or the optical signal acquisition component of the detection device is abnormal, the sets of photoelectric data corresponding to all of the wavelengths will be abnormal. It may be determined that reaction cup is polluted or damaged, the bubbles or solid foreign matters are existed in the reaction cup or the detection device is abnormal when the set of photoelectric data corresponding to each of the wavelengths is abnormal. Optionally, the number of occurrences of the state determination characteristics in the signal sequences corresponding to at least one wavelength in a plurality of detection periods may be counted to determine a statistical number, and the type of the abnormality may be further identified based on the comparison of the statistical number with a statistical threshold. For example, if each of the wavelength sub-sequences shows a state determination characteristic, and the statistical number is less than or equal to the statistical threshold, it may be determined that the foreign matters are existed in the reaction liquid. If each of the wavelength sub-sequences shows the state determination characteristic, and the statistical number is greater than the statistical threshold, it may be determined that the detection device is abnormal or the reaction cup is polluted or damaged.

In an example, the operation that the state monitoring is performed by using the at least two sets of photoelectric data includes the following operations. Whether a set of photoelectric data corresponding to each of the wavelengths is abnormal is determined. When all sets of photoelectric data are abnormal, it is determined that the reaction cup is polluted or damaged, the foreign matters are existed in the reaction cup, the foreign matters are existed in the liquid in the reaction cup or the detection device of the sample analyzer is abnormal. When partial sets of photoelectric data are abnormal, for example, the photoelectric data corresponding to partial wavelengths is abnormal, it is determined that the liquid in the reaction cup is abnormal or the reaction cup is discolored. For example, when the set of photoelectric data corresponding to the target wavelength is abnormal and at least one set of photoelectric data corresponding to at least one wavelength other than the target wavelength is normal, it may be determined that the liquid in the reaction cup is abnormal (such as uneven mixing of the reaction liquid) or the reaction cup is discolored. Generally, the abnormal liquid or the discoloration of the reaction cup may not affect all sets of photoelectric data corresponding to all of the wavelengths. Therefore, when the partial sets of photoelectric data corresponding to partial wavelengths are abnormal, it may be determined that the liquid in the reaction cup is abnormal or the reaction cup is discolored. Optionally, the number of occurrences of the state determination characteristics in the signal sequences corresponding to at least one wavelength in a plurality of detection periods may be counted to determine a statistical number, and the type of the abnormality may be further identified based on the comparison of the statistical number with the statistical threshold. For example, if the signal sequences corresponding to partial wavelengths show the state determination characteristics and the statistical number is less than or equal to the statistical threshold, it may be determined that the reaction liquid is unevenly mixed. If the signal sequences corresponding to partial wavelengths show the state determination characteristics and the statistical number is greater than the statistical threshold, it may be determined that the reaction cup is discolored.

In some implementations, the operation that the state monitoring is performed by using the at least two sets of photoelectric data includes the following operations. Light intensity values in the at least two sets of photoelectric data corresponding to the at least two wavelengths are compared, and in response to a magnitude relationship between the light intensity values corresponding to the at least two wavelengths not satisfying a sixth preset condition, it is determined that at least one of the at least two sets of photoelectric data corresponding to the light intensity values that do not satisfy the sixth preset condition is abnormal.

It can be understood that different wavelengths have different sensitivities when detecting different liquids. When the liquid in the reaction cup, the reaction cup and the detection device are all normal, the photoelectric data corresponding to all of the wavelengths is also normal. In such situation, the light intensity values corresponding to different wavelengths usually have a specific magnitude relationship. When the magnitude relationship between the light intensity values corresponding to the at least two wavelengths is different from the specific magnitude relationship, it may be determined that at least one set of the at least two sets of the photoelectric data corresponding to the at least two wavelengths is abnormal.

For example, the light intensity values include a peak value of a set of photoelectric data.

For example, the operation that the light intensity values in the at least two sets of photoelectric data corresponding to the at least two wavelengths are compared includes the following operations. Peak values of the at least two sets of photoelectric data corresponding to the at least two wavelengths are compared, and in response to a magnitude relationship between the peak values of the at least two sets of photoelectric data corresponding to the at least two wavelengths not satisfying the sixth preset condition, it may be determined that at least one of the at least two sets of photoelectric data corresponding to the light intensity values that do not satisfy the sixth preset condition is abnormal. For example, when the liquid in the reaction cup, the reaction cup and the detection device are all normal, the value B of the reaction cup signal corresponding to a wavelength S1 should be greater than the value B of the reaction cup signal corresponding to a wavelength S2. When the actually obtained value B of the reaction cup signal corresponding to the wavelength S 1 is smaller than the value B of the reaction cup signal corresponding to the wavelength S2, it may be determined that the photoelectric data corresponding to the wavelength S 1 and/or the wavelength S2 is abnormal.

In an example, the operation that the state monitoring is performed by using the at least two sets of the photoelectric data includes: comparing light intensity values of the at least two sets of photoelectric data corresponding to the at least two wavelengths; and in response to a difference between the light intensity values corresponding to the at least two wavelengths being greater than a preset threshold, it is determined that at least one of the at least two sets of photoelectric data corresponding to the light intensity values for which the difference is greater than the preset threshold is abnormal.

It can be understood that different wavelengths have different sensitivities when detecting different liquids. For a certain target testing item or a certain type of liquid, when the liquid in the reaction cup, the reaction cup and the detection device are all normal, the sets of photoelectric data corresponding to different wavelengths are also normal. In such situation, a range of difference between the light intensity values of the sets of photoelectric data corresponding to different wavelengths may be determined. When the actually obtained difference between the light intensity values corresponding to the at least two wavelengths is outside the range of difference, it may be determined that at least one set of the at least two sets of photoelectric data corresponding to the at least two wavelengths is abnormal.

For example, the operation that the light intensity values of the at least two sets of photoelectric data corresponding to the at least two wavelengths are compared includes the following operations. Peak values of the at least two sets of photoelectric data corresponding to the at least two wavelengths are compared. In response to a difference between the peak values corresponding to the at least two wavelengths being greater than a preset threshold, it may be determined that at least one of the at least two sets of photoelectric data corresponding to the light intensity values for which the difference is greater than the preset threshold is abnormal. For example, when the liquid in the reaction cup, the reaction cup and the detection device are all normal, a difference between the value B of the reaction cup signal corresponding to the wavelength S 1 and the value B of the reaction cup signal corresponding to the wavelength S2 should be less than or equal to the preset threshold. When the actually obtained difference between the value B of the reaction cup signal corresponding to the wavelength S 1 and the value B of the reaction cup signal corresponding to the wavelength S2 is greater than the preset threshold, it may be determined that the photoelectric data corresponding to the wavelength S 1 and/or the wavelength S2 is abnormal.

In some implementations, the processor may acquire a testing result of the liquid in the reaction cup, such as the reaction liquid, according to the at least two sets of photoelectric data corresponding to the at least two wavelengths. For example, the light emitted from the reaction cup is split into optical signals corresponding to at least two different wavelengths, the absorbance or transmittance is obtained according to the optical signals corresponding to the at least two wavelengths, and the testing result of the sample is obtained according to the absorbance or transmittance.

For example, the at least two optical signals are acquired simultaneously, the at least two optical signals are produced by a light emitted from the same position of the reaction cup after the irradiation light(s) irradiates(irradiate) the reaction cup, and the at least two optical signals have different wavelengths. The at least two optical signals are processed to obtain at least two sets of photoelectric data. Subsequently, at least one set of photoelectric data may be corrected based on the at least two sets of photoelectric data from the same position, and/or, the testing result of the liquid in the reaction cup is obtained.

In an example, the operation that the testing result of the liquid in the reaction cup is obtained according to the at least two sets of photoelectric data corresponding to the at least two wavelengths includes the following operations. A rising edge and a falling edge of the signal sequence are obtained. A first signal sub-sequence is extracted from the signal sequence according to the rising edge and the falling edge. The testing result of the liquid in the reaction cup is obtained according to at least two first signal sub-sequences, and the first signal sub-sequence is located between the rising edge and the falling edge. As illustrated in FIG. 17, since all signals, such as signal intensities, are continuously acquired for each wavelength in one or more detection periods, the first signal sub-sequence in each detection period may be determined from the rising edge and the falling edge of the signal sequence in each detection period. With reference to FIG. 7, the signal sequence in each detection period includes a rising edge signal sub-sequence 112 (rising edge), a reaction cup signal sub-sequence 113, and a falling edge signal sub-sequence 115 (falling edge). The reaction cup signal sub-sequence 113 is a signal sub-sequence between the rising edge signal sub-sequence 112 and the falling edge signal sub-sequence 115. For example, the first signal sub-sequence may be extracted from the reaction cup signal sub-sequence 113. The reaction cup signal sub-sequence 113 is a top platform part of the signal sequence, and the signal of the reaction cup signal sub-sequence 113 generally has a relatively stable value. A relatively accurate testing result can be obtained by extracting the first signal sub-sequence from the reaction cup signal sub-sequence 113 and obtaining the testing result of the liquid in the reaction cup according to at least two of the first signal sub-sequences.

Optionally, when extracting the first signal sub-sequence from the signal sequence according to the rising edge and the falling edge of the signal sequence, the devices, such as the opto-couplers and code discs that generate the edge of the code teeth signal of the photoelectric code disc can be eliminated. The signal value for the calculation result may be obtained only through signal processing including, such as acquisition of the signal sequence during the whole process when the reaction cup passes through the detection device and waveform alignment, thereby saving hardware cost and debugging time.

In an example, the operation that the testing result of the liquid in the reaction cup is obtained according to the at least two sets of photoelectric data corresponding to the at least two wavelengths includes the following operations. At least one reference signal is generated during the irradiation on the reaction cup by the light source component. A second signal sub-sequence is extracted from the signal sequence corresponding to the reaction cup according to the reference signal. The testing result of the liquid in the reaction cup is obtained according to the second signal sub-sequence. For example, a photoelectric code disc with the number of teeth equal to the number of reaction cups is installed under the reaction disk, and each jumping edge of a code tooth signal is aligned with one side of the corresponding reaction cup through assembling and debugging. The jumping edge of the code tooth signal is generated when the reaction cup moves to the detection device. With reference to FIG. 19, each generated code tooth jump 101 may be monitored as the reaction disk rotates, and the second signal sub-sequence may be extracted from the signal sequence corresponding to the reaction cup according to an interval 102 corresponding to each code tooth jump 101. Because the optical signal acquisition component acquires a plurality of signals of the reaction cup in one detection period, the edge of the code tooth signal of the photoelectric code disc does not need to be accurately aligned with a specific position (such as the center) of each reaction cup, but only needs to be located before the center of the reaction cup, so that the acquired signal sequence contains the signal from the center of the reaction cup, and the difficulty of parts processing, assembling and debugging can be greatly reduced. Because the reaction cup and the liquid in the reaction cup are uneven, the positions of the reaction cup corresponding to the second signal sub-sequences extracted from the signal sequences in a plurality of detection periods may be accurately controlled based on the reference signal, such that the relative position for acquiring the light signal corresponding to the second signal sub-sequence can be repeated with a high accuracy. Therefore, a reaction curve with small error and high accuracy can be obtained at the position of the reaction cup with high accuracy on repetition, and the accuracy of the testing results at a plurality of acquisition points can be ensured.

In some implementations, the processor may further be configured to: generate at least two reaction curves respectively corresponding to at least two wavelengths for the sample added in the reaction cup according to the at least two sets of photoelectric data corresponding to the at least two wavelengths for the reaction cup. Each of the at least two reaction curves is derived from the intensities of signals in a plurality of detection periods (or may be referred to as rotation periods) of the reaction cup, and a detection period is formed by a duration of each continuous irradiation on the reaction cup by the light source component. For example, the at least two reaction curves corresponding to the at least two wavelengths may also be output, and/or, the testing result of the sample may be obtained according to information such as an amplitude and a change rate of the reaction curve. For example, the absorbance reaction curve corresponding to each wavelength may be obtained during the detection process of the wavelength, and the testing result may be calculated by using one or more of the detection results of a plurality of wavelengths.

In an example, the first signal sub-sequences or the second signal sub-sequences corresponding to each wavelength in a plurality of detection periods of the same reaction cup may be extracted according to the signal sequences corresponding to each wavelength for the same reaction cup, and at least two reaction curves respectively corresponding to at least two wavelengths may be generated according to the first signal sub-sequences or the second signal sub-sequences corresponding to the at least two wavelengths in the plurality of detection periods. Each detection period corresponds to a respective line segment in the reaction curve. With reference to FIG. 5, FIG. 5 illustrates a reaction curve corresponding to a wavelength. The reaction curve corresponding to each wavelength includes a plurality of line segments, and each line segment corresponds to the first signal sub-sequence or the second signal sub-sequence in a detection period. Optionally, since the first signal sub-sequence or the second signal sub-sequence is a segment extracted from the signal sequence of the respective detection period, the adjacent line segments in the plurality of line segments in the reaction curve may have an interval according to the duration corresponding to each first signal sub-sequence or each second signal sub-sequence, and the duration corresponding to each first signal sub-sequence or each second signal sub-sequence may be reflected.

In some implementations, each wavelength for the same reaction cup may correspond to a plurality of first signal sub-sequences or second signal sub-sequences in a plurality of detection periods. For each first signal sub-sequence or second signal sub-sequence, a single-point absorbance corresponding to the signal sub-sequence is calculated by interpolation algorithm, averaging, taking the median and so on. Compared with acquiring the absorbance of one point in each detection period, the determination of the single-point absorbance according to the signal sub-sequence can improve the accuracy of the absorbance obtained in each detection period.

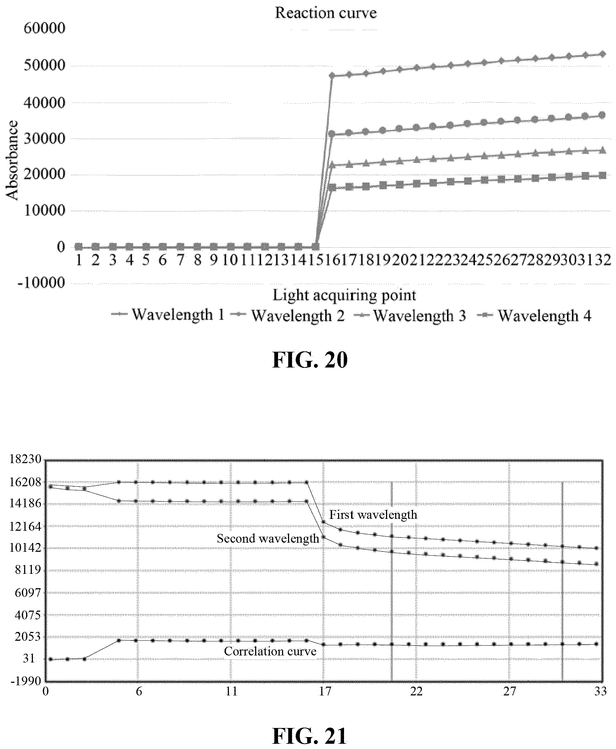

In an example, with reference to FIG. 20, the reaction curve of each of the wavelengths may also be determined based on the determined single-point absorbance corresponding to the wavelength in the plurality of detection periods. Each light acquiring point in FIG. 20 corresponds to a single-point absorbance calculated from the first signal sub-sequence or the second signal sub-sequence corresponding to the wavelength in a detection period. For example, the at least two reaction curves respectively corresponding to at least two wavelengths may also be output, and/or, the testing result of the sample may be obtained according to information such as an amplitude and a change rate of the reaction curve. For example, the absorbance reaction curve corresponding to each wavelength may be obtained during the detection process of the wavelength, and the testing result may be calculated by using one or more of the detection results of a plurality of wavelengths.

In some implementations, the operation that the testing result of the liquid in the reaction cup is obtained according to the at least two sets of photoelectric data includes the following operations. A target testing item corresponding to a sample added in the reaction cup irradiated by the light source component is determined; a set of photoelectric data corresponding to the target wavelength is determined from the at least two sets of photoelectric data according to the target testing item; and the testing result of the liquid in the reaction cup is obtained according to the set of photoelectric data corresponding to the target wavelength.

For example, a certain wavelength or a wavelength in a certain range may be sensitive to certain testing items or certain types of liquid testing items, and the certain wavelength or a wavelength in the certain range sensitive to the reaction liquid may be selected as the target wavelength. The testing result of the liquid in the reaction cup is obtained according to the set of photoelectric data corresponding to the target wavelength. In this way, the obtained testing result of the liquid in the reaction cup can be more accurate by applying different target wavelengths for different target testing items.

Optionally, a certain wavelength is more effective in detecting interfering substances such as lipid particles, thus this wavelength may be used as an auxiliary wavelength to eliminate the interference. For example, a certain wavelength or a wavelength in a certain range sensitive to the reaction liquid may be selected as the target wavelength, the set of photoelectric data corresponding to the target wavelength is used for obtaining a preliminary result such as absorbance, and a set of photoelectric data corresponding to the auxiliary wavelength is used for eliminating the interference in the preliminary result, to obtain the testing result of the liquid in the reaction cup. The obtained testing result of the liquid in the reaction cup can be more accurate by applying different target wavelengths for different target testing items.

For example, after determining the set of photoelectric data corresponding to the target wavelength from the at least two sets of the photoelectric data according to the target testing item, the method further includes the following operations. It is determined whether the set of photoelectric data corresponding to the target wavelength is abnormal. In response to an absence of an abnormality in the set of photoelectric data, a testing result of the liquid in the reaction cup is determined according to the set of photoelectric data corresponding to the target wavelength. In response to an abnormality in the set of photoelectric data, the set of photoelectric data corresponding to the target wavelength is corrected based on the other sets of photoelectric data corresponding to wavelengths other than the target wavelength, and the testing result of the liquid in the reaction cup is obtained according to the corrected set of photoelectric data. In this way, it is possible to avoid determination of an inaccurate testing result from a set of abnormal photoelectric data corresponding to the target wavelength.

For example, the abnormality of the photoelectric data includes, but is not limited to, at least one of the following conditions. A duration of a signal sub-sequence in a signal sequence or a change in a characteristic time point of the signal sub-sequence does not satisfy a second preset condition; a signal of a baseline signal sub-sequence does not satisfy a first preset condition; an interval between boundary time points of signal sub-sequences in two consecutive signal sequences does not satisfy a third preset condition; a difference between sudden-change-in-signal amplitudes corresponding to state determination characteristics in signal sequences of two adjacent reaction cups of a plurality of reaction cups satisfies a fourth preset condition; a change parameter of target signal intensities corresponding to signal sequences in a plurality of detection periods for the same reaction cup containing the reaction liquid does not satisfy a fifth preset condition, or a signal sequence shows a sudden-change-in-signal characteristic or the signal sequences in a plurality of the detection periods show a same sudden-change-in-signal characteristic at the same time period. For example, a light intensity value of the set of photoelectric data corresponding to the target wavelength may be compared with a light intensity value of at least one set of photoelectric data corresponding to at least one wavelength other than the target wavelength to determine whether the magnitude relationship satisfies a sixth preset condition, and if the magnitude relationship does not satisfy the sixth preset condition, the set of photoelectric data corresponding to the target wavelength is determined to be abnormal.

In some implementations, the processor may be configured to obtain, from the at least two sets of photoelectric data, a first set of photoelectric data corresponding to a first wavelength and a second set of photoelectric data corresponding to a second wavelength. The first set of photoelectric data is corrected by using the second set of photoelectric data to obtain a third set of photoelectric data.

In an example, the processor may be further configured to process the third set of photoelectric data to obtain a processing result. For example, the processing result includes a testing result obtained by detecting the liquid in the reaction cup, that is, the testing result of the liquid in the reaction cup may be obtained according to the third set of photoelectric data. For example, a reaction curve corresponding to a wavelength is determined according to the third set of photoelectric data, and the testing result of the sample is determined according to the reaction curve.

For example, the first wavelength may be the target wavelength, and the second wavelength may be another wavelength other than the target wavelength or a preset wavelength other than the target wavelength. The sets of photoelectric data corresponding to different wavelengths are corrected mutually, so that more accurate photoelectric data can be obtained. For example, the first set of abnormal or inaccurate photoelectric data corresponding to the first wavelength may be corrected by using the second set of more accurate photoelectric data corresponding to the second wavelength. The first set of abnormal photoelectric data may be a signal sequence showing a sudden-change-in-signal characteristic such as a wave peak sub-sequence or a wave trough sub-sequence, which is not limited thereto.

For example, a plurality of optical signals, such as optical signals corresponding to three or more wavelengths, may be acquired simultaneously. The operation that the first set of photoelectric data corresponding to the first wavelength and the second set of photoelectric data corresponding to the second wavelength are obtained from the at least two sets of photoelectric data includes the following operations. A set of abnormal photoelectric data is obtained from the at least two sets of photoelectric data as the first set of photoelectric data; and the second set of photoelectric data corresponding to the second wavelength is determined according to the target testing item of the sample added in the reaction cup. For example, the testing result of an optical signal corresponding to a certain wavelength may be more accurate for a certain type of sample or a certain type of testing item, for example, the set of photoelectric data corresponding to the second wavelength may be a more accurate signal for the target testing item. For example, the second wavelength may be preset according to the target testing item.

In an example, the operation that the first set of photoelectric data is corrected by using the second set of photoelectric data to obtain the third set of photoelectric data includes the following operations. A correlation parameter between the first wavelength and the second wavelength is acquired, and the correlation parameter includes a correlation curve or a correlation coefficient. The correlation parameter is used for fitting the first set of photoelectric data and the second set of photoelectric data to obtain the third set of photoelectric data.

For example, FIG. 21 illustrates a schematic diagram of reaction curves corresponding to two wavelengths, in which the horizontal axis represents time, and the vertical axis represents absorbance. For example, each light acquiring point in the reaction curve corresponds to a single-point absorbance calculated from the first signal sub-sequence or the second signal sub-sequence corresponding to a respective wavelength in one detection period. As illustrated in FIG. 21, different sets of photoelectric data corresponding to different wavelengths have a certain correlation. For example, when the liquid in the reaction cup, the reaction cup and the detection device are all normal, the sets of photoelectric data corresponding to different wavelengths are obtained, and the correlation parameter between different wavelengths may be determined according to the sets of photoelectric data corresponding to different wavelengths. For example, when the third set of photoelectric data is abnormal, the first set of photoelectric data and the second set of photoelectric data may be fitted according to the correlation parameter to obtain the third set of photoelectric data. For example, the absorbance of the set of photoelectric data corresponding to the second wavelength is added to the absorbance of the corresponding detection period in the correlation curve to obtain the third set of photoelectric data in the detection period. In another example, the second set of photoelectric data is firstly converted by using the correlation parameter, and the converted second set of photoelectric data and the first set of photoelectric data are fitted. In another example, the first set of photoelectric data and the second set of photoelectric data may also be fitted to the correlation curve, which is not limited thereto.

In an example, the operation that the testing result of the liquid in the reaction cup is acquired according to the at least two sets of photoelectric data includes the following operations. Weights of the at least two wavelengths are acquired. A degree of reactivity corresponding to each of the at least two wavelengths is obtained according to the set of photoelectric data corresponding to the wavelength. A degree of reactivity of the sample added in the reaction cup is obtained according to the weights and the degree of reactivity of the at least two wavelengths. The testing result of the liquid in the reaction cup is obtained according to the degree of reactivity. Some effects brought by the abnormality can be reduced or eliminated by combining the sets of photoelectric data corresponding to a plurality of different wavelengths to determine the testing result of the sample, and the accuracy of the testing result can be improved. Optionally, the weights of the photoelectric data corresponding to different wavelengths may be determined according to the target testing item, which is not limited thereto.

In some implementations, when the state of the reaction cup or the liquid in the reaction cup or the state of the detection device in the sample analyzer is abnormal, the analyzer needs to have the ability to retest the sample, perform automatic maintenance on the analyzer, or raise an alarm. Therefore, the user can obtain a valid result or be informed that the analyzer is failed and needs to be maintained.

In an example, the re-test (retesting) includes at least one of the following operations.
1. A ratio between a volume of the sample and a volume of the reagent for the same sample to be tested is unchanged, the same item is retested and the result is outputted.
2. The ratio between the volume of the sample and the volume of the reagent for the same sample to be tested is increased, the same item is retested and the result is outputted (including sample dilution).
3. The ratio between the volume of the sample and the volume of the reagent for the same sample to be tested is decreased, the same item is retested and the result is outputted.
4. After the reaction of the original testing procedure is finished, a sample of the same sample to be tested is continued to be added into the same reaction cup, the test is continued and the result is outputted.
5. After the reaction of the original testing procedure is finished, a reagent of the same item to be tested is continued to be added into the same reaction cup, the test is continued and the result is outputted.
6. After a parameter of a blanking time of a testing calculation program for the same sample to be tested becomes larger or smaller, the same item is retested and the result is outputted.
7. After a parameter of a reaction time of a testing calculation program for the same sample to be tested becomes larger or smaller, the same item is retested and the result is outputted.
8. Testing of another item for the same sample to be tested is initiated.

In an example, the instrument maintenance includes at least one of: the instrument automatically performs a maintenance process such as cleaning the reaction cup, a reagent probe, a sample probe, or a stirring rod, or a maintenance process such as discharging a cleaning agent into the reaction cup or into a cleaning cell for cleaning through a cleaning mechanism, a cleaning probe, etc.

In an example, the instrument alarm or prompt includes at least one of: the instrument alarms, according to a feedback of a signal, an abnormal testing result, an abnormal operation of the optical signal acquisition component, an abnormal operation of the light source lamp, an abnormal movement of the reaction disk, an abnormal operation of the reaction cup cleaning mechanism, etc., or alarms that a manual maintenance of the instrument is required.

In some implementations, the sample analyzer may include a plurality of detection devices, such as a plurality of photometers. The plurality of detection devices may acquire, in parallel, optical signals emitted from the same position or different positions of the reaction cup after the irradiation light irradiates the reaction cup, and may process the optical signals to obtain multiple sets of photoelectric data corresponding to respective detection devices. In an example, the sets of photoelectric data corresponding to different detection devices may be cross-referenced. For example, the sets of photoelectric data corresponding to different detection devices may be compared with one another, and at least one set of photoelectric data corresponding to at least one of the detection devices may be corrected, which is not limited thereto.

The sample analyzer provided in the embodiments of the invention includes a sampling device, a reaction device and a detection device. The detection device includes a light source, an optical signal acquisition component, a memory and a processor. The sampling device is configured to aspirate a sample with a predetermined volume and dispense the sample into a reaction cup. A reagent and the sample are mixed in the reaction cup to prepare a reaction liquid. The reaction cup rotates relative to the detection device, and the light source irradiates an irradiation light from the light source to the reaction cup during the rotational movement of the reaction cup relative to the detection device. The continuous irradiation on the reaction cup during the movement of the reaction cup relative to the light source forms a detection period, and the optical signal acquisition component acquires a plurality of signals from the reaction cup in the detection period. The memory stores intensities of the acquired signals and timings for acquiring the signals, to obtain a signal sequence, of the reaction cup, including corresponding relationships between the intensities and the timings of the plurality of signals. The processor processes the signal sequence. The signal sequence is formed by acquiring and storing the intensities and the timings of the plurality of signals from the reaction cup in the detection period, so that the signal sequence can reflect the real state of the reaction cup and the liquid in the reaction cup more comprehensively, and a more accurate processing result can be obtained.

In some implementations, the sample analyzer includes a sampling device, a reagent dispensing device, a reaction device, a detection device, and a processor. The sampling device is configured to aspirate a sample from a sample container transported to a sampling position and dispense the aspirated sample to a reaction cup. The reagent dispensing device is configured to dispense a reagent into the reaction cup. The reaction device is configured to incubate the sample added in the reaction cup, and prepare the reaction liquid from the reagent and the sample. The detection device includes a light source component, an optical signal acquisition component and an analog-to-digital conversion component. The light source component is configured to generate irradiation light(s), and the irradiation light(s) irradiates(irradiate) a same position of the reaction cup or of the liquid in the reaction cup. The reaction cup rotates relative to the light source component, the optical signal acquisition component acquires at least two optical signals simultaneously, the at least two optical signals are produced by a light emitted from the reaction cup or the liquid in the reaction cup after the irradiation light(s) irradiates(irradiate) the reaction cup or the liquid in the reaction cup, and wavelengths of the at least two optical signals are different from each other. The analog-to-digital conversion component is configured to perform analog-to-digital conversion on the at least two optical signals to obtain at least two sets of photoelectric data. Each set of photoelectric data is a signal sequence resulted from corresponding relationships between intensities of signals and timings for acquiring the signals. The at least two sets of photoelectric data acquired during continuous irradiation on the same reaction cup by the light source component include signal sequences respectively corresponding to at least two wavelengths, and the signal sequence corresponding to a single wavelength includes the corresponding relationships between intensities of at least two signals and timings for acquiring the at least two signals. The processor is configured to process the at least two sets of photoelectric data corresponding to the at least two wavelengths to obtain a processing result. Therefore, a plurality of sets of photoelectric data corresponding to a plurality of wavelengths at the same position can be obtained, to obtain a more accurate processing result.

In an example, the light emitted from the same position of the reaction cup is split into at least two light signals corresponding to the at least two wavelengths by a light splitting device. The at least two light signals are acquired simultaneously and processed to obtain at least two sets of photoelectric data, so that the plurality of sets of photoelectric data corresponding to a plurality of wavelengths at the same position in the same time period can be simultaneously obtained, so as to obtain a more accurate processing result.

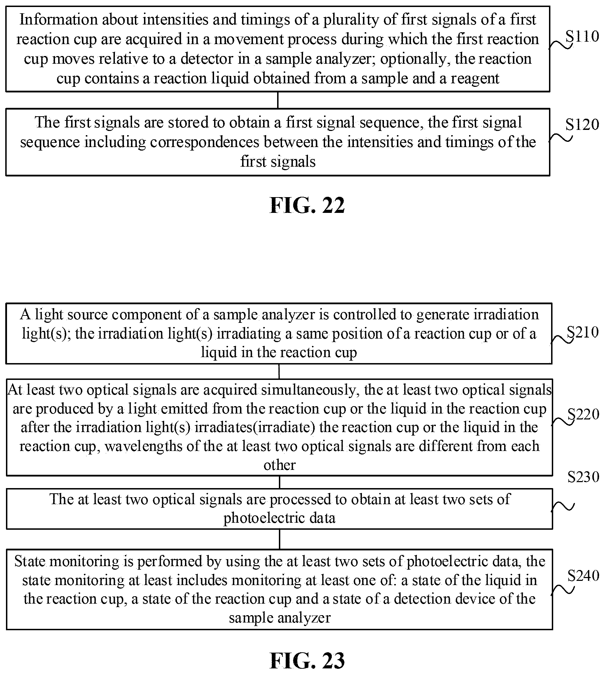

With reference to FIG. 22 and in conjunction with the aforementioned embodiments, FIG. 22 is a flow diagram of a method for acquiring a signal of a sample analyzer according to an embodiment of the invention.

As illustrated in Fig. 22 the method for acquiring the signal of the sample analyzer includes the following operations S 110 to S120.

In operation S110, information about intensities and timings of a plurality of first signals of a first reaction cup are acquired during a movement of a reaction cup relative to a detector in the sample analyzer. Optionally, the reaction cup contains a reaction liquid obtained by reaction between a sample and a reagent.

In operation S 120, the first signals are stored to obtain a first signal sequence. The first signal sequence includes corresponding relationships between the intensities and timings of the first signals.

Information about intensities and timings of a plurality of second signals of a second reaction cup are acquired during a movement of the reaction cup relative to the detector.

The second signals are stored to obtain a second signal sequence. The second signal sequence includes corresponding relationships between the intensities and timings of the second signals.

The first signal sequence is compared with the second signal sequence.

It is determined whether the reaction cup, the reaction liquid, the detector and/or the relative movement between the reaction cup and the detector are abnormal according to a comparison result.

Optionally, at least 10 signals generated by the first reaction cup and/or the second reaction cup are acquired to obtain a signal sequence including the corresponding relationships between the intensities and timings of the at least 10 signals. Preferably, at least 50 signals of the reaction cup are acquired to obtain a signal sequence including the corresponding relationships between the intensities and timings of the at least 50 signals.

Optionally, each of the first signal sequence and the second signal sequence includes at least one signal sub-sequence. It is determined whether the reaction cup, the reaction liquid, the detector and/or the relative movement between the reaction cup and the detector are abnormal based on changes in the signal sub-sequence in the first signal sequence and in the signal sub-sequence in the second signal sequence.

Optionally, the first signal sequence and the second signal sequence are compared to determine whether the first signal sequence and the second signal sequence show a same sudden-change-in-signal characteristic, and it is determined whether the reaction cup, the reaction liquid, the detector and/or the relative movement between the reaction cup and the detector are abnormal based on the sudden-change-in-signal characteristic.

Optionally, the first reaction cup is adjacent to the second reaction cup and the first reaction cup and the second reaction cup pass through the detector successively. Alternatively, the first reaction cup and the second reaction cup are the same reaction cup and pass through the detector again after a plurality of reaction cups.

The specific principle and implementations of the method for acquiring the signal provided by the embodiment of the invention are similar to that of the sample analyzer in the aforementioned embodiments, and will not be elaborated herein again.

With reference to FIG. 23 and in conjunction with the aforementioned embodiments, FIG. 23 is a flow diagram of a method for controlling a sample analyzer according to an embodiment of the invention.

As illustrated in FIG. 23, the method for controlling the sample analyzer includes the following operations S210 to S230.

In operation S210, a light source component of a sample analyzer is controlled to generate irradiation light(s). The irradiation light(s) irradiates(irradiate) a same position of a reaction cup or of a liquid in the reaction cup.

In operation S220, at least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup. Wavelengths of the at least two optical signals are different from each other.

In operation S230, the at least two optical signals are processed to obtain at least two sets of photoelectric data.

In operation S240, state monitoring is performed by using the at least two sets of photoelectric data. The state monitoring at least includes monitoring at least one of: a state of the liquid in the reaction cup, a state of the reaction cup and a state of a detection device of the sample analyzer.

Optionally, the reaction cup rotates around the light source component. Each set of photoelectric data is a signal sequence resulted from corresponding relationships between intensities of signals and timings for acquiring the signals. The at least two sets of photoelectric data acquired during continuous irradiation on the reaction cup by the light source component include signal sequences respectively corresponding to at least two wavelengths, and the signal sequence corresponding to a single wavelength includes the corresponding relationships between intensities of at least two signals and timings for acquiring the at least two signals.

Optionally, the irradiation lights irradiate the same position of reaction cup or of the liquid in reaction cup simultaneously, and the at least two light signals are acquired simultaneously.

Optionally, the light source component is a light source array, the reaction cup rotates relative to the light source component and passes through each of point light sources in the light source array in turn, and wavelengths of the point light sources are different from one another.

Optionally, the operation that the state monitoring is performed by using the at least two sets of photoelectric data includes the following operations.

A target testing item of the liquid in the reaction cup irradiated by the light source component or a type of the liquid in the reaction cup irradiated by the light source component is obtained.

A target wavelength is determined according to the target testing item or the type of the liquid.

The state monitoring is performed by using a set of photoelectric data corresponding to the target wavelength.

Optionally, the operation that the state monitoring is performed by using the at least two sets of photoelectric data includes the following operation.

The liquid in the reaction cup is determined to be abnormal when the set of photoelectric data corresponding to the target wavelength is abnormal.

Optionally, the operation that the state monitoring is performed by using the at least two sets of photoelectric data includes the following operations.

It is determined that the reaction cup is polluted or damaged, foreign matters are existed in the reaction cup, foreign matters are existed in the liquid in the reaction cup, or the detection device of the sample analyzer is abnormal, when each set of photoelectric data corresponding to a respective one of the wavelengths is abnormal.

Optionally, the operation that the state monitoring is performed by using the at least two sets of photoelectric data includes the following operations.

It is determined whether each set of photoelectric data corresponding to a respective one of the wavelengths is abnormal.

It is determined that the reaction cup is polluted or damaged, foreign matters are existed in the reaction cup, foreign matters are existed in the liquid in the reaction cup, or the detection device of the sample analyzer is abnormal, when all the sets of photoelectric data are abnormal.

It is determined that the liquid in the reaction cup is abnormal or the reaction cup is discolored when partial sets of photoelectric data are abnormal.

Optionally, the operation that the state monitoring is performed by using the at least two sets of photoelectric data includes the following operations.

Light intensity values in the at least two sets of photoelectric data corresponding to the at least two wavelengths are compared.

In response to a magnitude relationship between the light intensity values corresponding to the at least two wavelengths not satisfying a preset condition, it is determined that at least one of the at least two sets of photoelectric data corresponding to the light intensity values that do not satisfy the preset condition is abnormal.

Alternatively, in response to a difference between the light intensity values corresponding to the at least two wavelengths being greater than a preset threshold, it is determined that at least one of at least two sets of photoelectric data corresponding to the light intensity values for which the difference is greater than the preset threshold is abnormal.

The state monitoring is performed by using the at least one set of abnormal photoelectric data.

Optionally, the light intensity values include a peak value of a set of photoelectric data. The reaction cup rotates relative to the light source component. The set of photoelectric data is a signal sequence resulted from corresponding relationships between intensities of signals and timings for acquiring the signals. The at least two sets of photoelectric data acquired during continuous irradiation on the same reaction cup by the light source component include signal sequences respectively corresponding to at least two wavelengths, and the signal sequence corresponding to a single wavelength includes the corresponding relationships between intensities of at least two signals and timings for acquiring the at least two signals.

The at least two optical signals, formed by a light emitted from the reaction cup or the liquid in the reaction cup after the irradiation light irradiates the reaction cup or the liquid in the reaction cup, are acquired and processed to obtain at least two sets of photoelectric data. Therefore, the plurality of sets of photoelectric data corresponding to a plurality of wavelengths at the same position can be obtained, so as to obtain a more accurate processing result.

The specific principle and implementations of the control method provided by the embodiment of the invention are similar to that of the sample analyzer in the aforementioned embodiments, and will not be elaborated herein again.

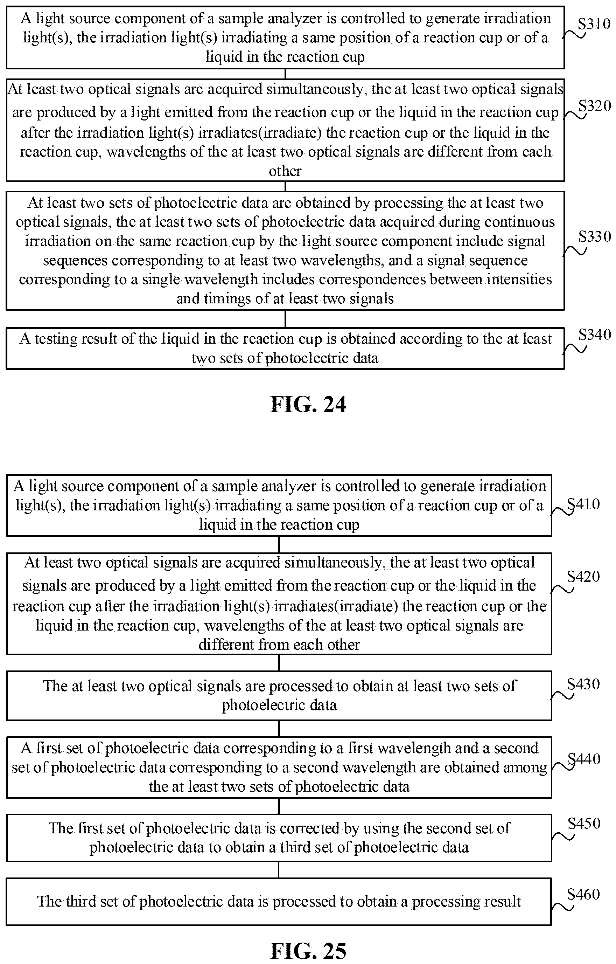

With reference to FIG. 24 and in conjunction with the aforementioned embodiments, FIG. 24 is a flow diagram of a method for controlling a sample analyzer according to an embodiment of the invention.

As illustrated in FIG. 24, the method for controlling the sample analyzer includes the following operations S310 to S340.

In operation S310, a light source component of a sample analyzer is controlled to generate irradiation light(s). The irradiation light(s) irradiates(irradiate) a same position of a reaction cup or of a liquid in the reaction cup.

In operation S320, at least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup. Wavelengths of the at least two optical signals are different from each other.

In operation S330, at least two sets of photoelectric data are obtained by processing the at least two optical signals. The at least two sets of photoelectric data acquired during continuous irradiation on the same reaction cup by the light source component include signal sequences respectively corresponding to at least two wavelengths, and a signal sequence corresponding to a single wavelength includes corresponding relationships between intensities of at least two signals and timings for acquiring the at least two signals.

In operation S340, a testing result of the liquid in the reaction cup is obtained according to the at least two sets of photoelectric data.

Optionally, the operation that the testing result of the liquid in the reaction cup is obtained according to the at least two sets of photoelectric data includes the following operations.

A rising edge and a falling edge of the signal sequence are obtained.

A first signal sub-sequence is extracted from the signal sequence according to the rising edge and the falling edge, and the testing result of the liquid in the reaction cup is obtained according to at least two first signal sub-sequences. The first signal sub-sequence is located between the rising edge and the falling edge.

Optionally, the operation that the testing result of the liquid in the reaction cup is obtained according to the at least two sets of photoelectric data includes the following operations.

At least one reference signal is generated during the irradiation on the reaction cup by the light source component.

A second signal sub-sequence is extracted from the signal sequence corresponding to the reaction cup according to the reference signal.

The testing result of the liquid in the reaction cup is obtained according to the second signal sub-sequence.

Optionally, the operation that the testing result of the liquid in the reaction cup is obtained according to the at least two sets of photoelectric data includes the following operations.

A target testing item corresponding to a sample added in the reaction cup irradiated by the light source component is obtained.

A set of photoelectric data corresponding to a target wavelength is determined from the at least two photoelectric data according to the target testing item.

The testing result of the liquid in the reaction cup is obtained according to the set of photoelectric data corresponding to the target wavelength.

Optionally, after determining the set of photoelectric data corresponding to the target wavelength from the at least two sets of photoelectric data according to the target testing item, the method further includes the following operations.

It is determined whether the set of photoelectric data corresponding to the target wavelength is abnormal.

In response to an absence of an abnormality in the set of photoelectric data, a testing result of the sample added in the reaction cup is determined according to the set of photoelectric data corresponding to the target wavelength.

In response to an abnormality in the set of photoelectric data, the set of photoelectric data corresponding to the target wavelength is corrected based on other sets of photoelectric data corresponding to wavelengths other than the target wavelength.

The testing result of the liquid in the reaction cup is obtained according to the corrected set of photoelectric data.

Optionally, the operation that the testing result of the sample added in the reaction cup is obtained according to the at least two sets of photoelectric data corresponding to the at least two wavelengths includes the following operations.

Weights of the at least two wavelengths are obtained, and a degree of reactivity corresponding to each of the at least two wavelengths is obtained according to at least two sets of photoelectric data corresponding to the at least two wavelengths.

A degree of reactivity of the liquid in the reaction cup is obtained according to the weights and the degree of reactivity of the at least two wavelengths.

The testing result of the sample added in the reaction cup is obtained according to the degree of reactivity of the liquid in the reaction cup.

Optionally, the method further includes the following operations.

At least two reaction curves corresponding to the at least two wavelengths for the sample added in the reaction cup are generated according to the at least two sets of photoelectric data corresponding to the at least two wavelengths for the reaction cup. Each of the at least two reaction curves is obtained from intensities of signals in a plurality of detection periods of the reaction cup, and a detection period is formed by a duration of each continuous irradiation on the reaction cup by the light source component.

The at least two reaction curves corresponding to the at least two wavelengths are output. Each detection period corresponds to a respective line segment in the reaction curve. The specific principle and implementations of the control method provided by the embodiment of the invention are similar to that of the sample analyzer in the aforementioned embodiments, and will not be elaborated herein again.

With reference to FIG. 25 and in conjunction with the aforementioned embodiments, FIG. 25 is a flow diagram of a method for controlling a sample analyzer according to an embodiment of the invention.

As illustrated in FIG. 25, the method for controlling the sample analyzer includes the following operations S410 to S460.

In operation S410, a light source component of a sample analyzer is controlled to generate irradiation light(s). The irradiation light(s) irradiates(irradiate) a same position of a reaction cup or of a liquid in the reaction cup.

In operation S420, at least two optical signals are acquired simultaneously. The at least two optical signals are produced by a light emitted from the reaction cup or the liquid in the reaction cup after the irradiation light(s) irradiates(irradiate) the reaction cup or the liquid in the reaction cup. Wavelengths of the at least two optical signals are different from each other.

In operation S430, the at least two optical signals are processed to obtain at least two sets of photoelectric data.

In operation S440, a first set of photoelectric data corresponding to a first wavelength and a second set of photoelectric data corresponding to a second wavelength are obtained from the at least two sets of photoelectric data.

In operation S450, the first set of photoelectric data is corrected by using the second set of photoelectric data to obtain a third set of photoelectric data.

In operation S460, the third set of photoelectric data is processed to obtain a processing result.

Optionally, the operation that the first set of photoelectric data is corrected by using the second set of photoelectric data to obtain the third set of photoelectric data includes the following operations.

A correlation parameter between the first wavelength and the second wavelength is obtained. The correlation parameter includes a correlation curve or a correlation coefficient.

The correlation parameter is used for fitting the first set of photoelectric data and the second set of photoelectric data to obtain the third set of photoelectric data.

Optionally, a plurality of optical signals are acquired simultaneously, and the operation that the first set of photoelectric data corresponding to the first wavelength and the second set of photoelectric data corresponding to the second wavelength are obtained from the at least two sets of photoelectric data includes the following operations.

A set of abnormal photoelectric data in the at least two sets of photoelectric data is obtained as the first set of photoelectric data.

The second set of photoelectric data corresponding to the second wavelength is determined according to a target testing item of a sample added in the reaction cup.

Optionally, the processing result includes a testing result obtained by testing the liquid in the reaction cup.

Optionally, the reaction cup rotates around the light source component. Each set of photoelectric data is a signal sequence resulted from corresponding relationships between intensities of signals and timings for acquiring the signals. The at least two set of photoelectric data acquired during continuous irradiation on the reaction cup by the light source component include signal sequences respectively corresponding to at least two wavelengths, and the signal sequence corresponding to a single wavelength includes the corresponding relationships between intensities of at least two signals and timings for acquiring the at least two signals.

The specific principle and implementations of the control method provided by the embodiment of the invention are similar to that of the sample analyzer in the aforementioned embodiments, and will not be elaborated herein again.

Those of ordinary skill in the art will appreciate that all or some of the steps, systems, functional modules/units in devices in the above disclosed methods may be implemented as software, firmware, hardware, and an appropriate combination thereof. In hardware embodiments, the division of functional modules/units mentioned in the above description does not necessarily correspond to the division of physical components. For example, a physical component may have a plurality of functions or a function or step may be performed by several physical components cooperatively. Some or all of the physical components may be implemented as software executed by a processor, such as a central processing unit, a digital signal processor, or a microprocessor, or be implemented as hardware, or an integrated circuit, such as an application specific integrated circuit. Such software may be distributed on a computer-readable medium which may include a computer storage medium (or a non-transitory medium) and a communication medium (or a transitory medium). As is well-known to those of ordinary skill in the art, the term "computer storage medium" includes a transitory and non-transitory, or a removable and non-removable mediums implemented in any method or technique for storing information, such as computer-readable instructions, data structures, program modules, or other data. The computer storage media includes, but is not limited to, a Random Access Memory (RAM), a Read Only Memory (ROM), an Electrically Erasable Programmable ROM (EEPROM), a flash memory or other memory technologies, a Compact Disc ROM (CD-ROM), a Digital Versatile Disk (DVD) or another optical disk storage, a magnetic cartridge, a magnetic tape, a magnetic disk storage or another magnetic storage device, or any other medium that may be used to store desired information and accessible by a computer. In addition, it is well-known to those of ordinary skill in the art that the communication medium typically includes computer readable instructions, data structures, program modules, or other data in modulated data signals such as carriers or other transmission mechanisms, and may include any information delivery medium.

It should be understood that the term "and/or" used in the specification of this invention and the appended claims refers to any combination and all possible combinations of one or more of the associated listed items and includes such combinations. Moreover, the terms "including", "comprising" or any other variant thereof are intended to cover a non-exclusive inclusion, such that a process, method, product or system that includes a series of elements not only includes such elements, but also includes other elements not specified expressly, or may include inherent elements of the process, method, product or system. Unless otherwise specified, an element limited by "including alan..." does not exclude the existence of other identical elements in the process, method, product or system that includes the element.

The above-mentioned serial numbers of the embodiments of the invention are only for description, and do not represent the advantages or disadvantages of the embodiments. The foregoing descriptions are merely specific embodiments of the invention, and are not intended to limit the scope of protection of the invention. Any equivalent modification or replacement easily conceived by a person skilled in the art within the technical scope disclosed in the invention shall fall within the scope of protection of the invention. Therefore, the scope of protection of the invention shall be subject to the scope of protection of the claims.

## Claims

1. A method for controlling a sample analyzer, comprising:
controlling a light source component of the sample analyzer to generate irradiation light(s), the irradiation light(s) irradiating a same position of a reaction cup or of a liquid in the reaction cup;
acquiring at least two optical signals, the at least two optical signals being produced by a light emitted from the reaction cup or the liquid in the reaction cup after the irradiation light(s) irradiates(irradiate) the reaction cup or the liquid in the reaction cup, wavelengths of the at least two optical signals being different from each other;
processing the at least two optical signals to obtain at least two sets of photoelectric data; and
performing state monitoring by using the at least two sets of photoelectric data, wherein the state monitoring at least comprises monitoring at least one of: a state of the liquid in the reaction cup, a state of the reaction cup and a state of a detection device of the sample analyzer.

2. The method for controlling the sample analyzer of claim 1, wherein the reaction cup rotates around the light source component, each set of photoelectric data is a signal sequence resulted from corresponding relationships between intensities of signals and timings for acquiring the signals, the at least two sets of photoelectric data acquired during continuous irradiation on the reaction cup by the light source component comprise signal sequences respectively corresponding to at least two wavelengths, and the signal sequence corresponding to a single wavelength comprises the corresponding relationships between intensities of at least two signals and timings for acquiring the at least two signals.

3. The method for controlling the sample analyzer of claim 1, wherein
the irradiation lights irradiate the same position of the reaction cup or of the liquid in the reaction cup simultaneously, and the at least two optical signals are acquired simultaneously; or
the light source component is a light source array, the reaction cup rotates relative to the light source component and passes through each of point light sources in the light source array in turn, and wavelengths of the point light sources are different from one another.

4. The method for controlling the sample analyzer of claim 1, wherein performing the state monitoring by using the at least two sets of photoelectric data comprises:
obtaining a target testing item of the liquid in the reaction cup irradiated by the light source component or a type of the liquid in the reaction cup irradiated by the light source component;
determining a target wavelength according to the target testing item or the type of the liquid; and
performing the state monitoring by using a set of photoelectric data corresponding to the target wavelength.

5. The method for controlling the sample analyzer of claim 4, wherein performing the state monitoring by using the at least two sets of photoelectric data comprises:
determining the liquid in the reaction cup to be abnormal when the set of photoelectric data corresponding to the target wavelength is abnormal.

6. The method for controlling the sample analyzer of claim 1, wherein performing the state monitoring by using the at least two sets of photoelectric data comprises:
determining that the reaction cup is polluted or damaged, foreign matters are existed in the reaction cup, foreign matters are existed in the liquid in the reaction cup, or the detection device of the sample analyzer is abnormal, when each set of photoelectric data corresponding to each of the wavelengths is abnormal.

7. The method for controlling the sample analyzer of claim 1, wherein performing the state monitoring by using the at least two sets of photoelectric data comprises:
determining whether each set of photoelectric data corresponding to each of the wavelengths is abnormal;
determining that the reaction cup is polluted or damaged, foreign matters are existed in the reaction cup, foreign matters are existed in the liquid in the reaction cup, or the detection device of the sample analyzer is abnormal, when all sets of photoelectric data are abnormal; and
determining that the liquid in the reaction cup is abnormal or the reaction cup is discolored when partial sets of photoelectric data are abnormal.

8. The method for controlling the sample analyzer of claim 1, wherein performing the state monitoring by using the at least two sets of photoelectric data comprises:
comparing light intensity values in at least two sets of photoelectric data respectively corresponding to at least two wavelengths;
in response to a magnitude relationship between the light intensity values corresponding to the at least two wavelengths not satisfying a preset condition, determining that at least one of the at least two sets of photoelectric data corresponding to the light intensity values that do not satisfy the preset condition is abnormal; or in response to a difference between the light intensity values corresponding to the at least two wavelengths being greater than a preset threshold, determining that at least one of the at least two sets of photoelectric data corresponding to the light intensity values for which the difference is greater than the preset threshold is abnormal; and
performing the state monitoring by using the at least one set of abnormal photoelectric data.

9. The method for controlling the sample analyzer of claim 8, wherein the light intensity values comprise a peak value of a set of photoelectric data, the reaction cup moves relative to the light source component, the set of photoelectric data is a signal sequence resulted from corresponding relationships between intensities of signals and timings for acquiring the signals, the at least two sets of photoelectric data acquired during continuous irradiation on the reaction cup by the light source component comprise signal sequences corresponding to the at least two wavelengths, and the signal sequence corresponding to a single wavelength comprises the corresponding relationships between intensities of at least two signals and timings for acquiring the at least two signals.

10. A method for controlling a sample analyzer, comprising:
controlling a light source component of the sample analyzer to generate irradiation light(s), the irradiation light(s) irradiating a same position of a reaction cup or of a liquid in the reaction cup;
acquiring at least two optical signals, the at least two optical signals being produced by a light emitted from the reaction cup or the liquid in the reaction cup after the irradiation light(s) irradiates(irradiate) the reaction cup or the liquid in the reaction cup, wavelengths of the at least two optical signals being different from each other;
processing the at least two optical signals to obtain at least two sets of photoelectric data, the at least two sets of photoelectric data acquired during continuous irradiation on the reaction cup by the light source component comprising signal sequences respectively corresponding to at least two wavelengths, and a signal sequence corresponding to a single wavelength comprising corresponding relationships between intensities of at least two signals and timings for acquiring the at least two signals; and
obtaining a testing result of the liquid in the reaction cup according to the at least two sets of photoelectric data.

11. The method for controlling the sample analyzer of claim 10, wherein obtaining the testing result of the liquid in the reaction cup according to the at least two sets of photoelectric data comprises:
obtaining a rising edge and a falling edge of the signal sequence;
extracting a first signal sub-sequence from the signal sequence according to the rising edge and the falling edge; and obtaining the testing result of the liquid in the reaction cup according to at least two first signal sub-sequences, wherein the first signal sub-sequence is located between the rising edge and the falling edge.

12. The method for controlling the sample analyzer of claim 10, wherein obtaining the testing result of the liquid in the reaction cup according to the at least two sets of photoelectric data comprises:
generating at least one reference signal during the irradiation on the reaction cup by the light source component;
extracting a second signal sub-sequence from the signal sequence corresponding to the reaction cup according to the reference signal; and
obtaining the testing result of the liquid in the reaction cup according to the second signal sub-sequence.

13. The method for controlling the sample analyzer of claim 10, wherein obtaining the testing result of the liquid in the reaction cup according to the at least two sets of photoelectric data comprises:
obtaining a target testing item corresponding to a sample added in the reaction cup irradiated by the light source component;
determining a set of photoelectric data corresponding to a target wavelength from the at least two sets of photoelectric data according to the target testing item; and
obtaining the testing result of the liquid in the reaction cup according to the set of photoelectric data corresponding to the target wavelength.

14. The method for controlling the sample analyzer of claim 13, further comprising:
after determining the set of photoelectric data corresponding to the target wavelength from the at least two sets of photoelectric data according to the target testing item;
determining whether the set of photoelectric data corresponding to the target wavelength is abnormal;
in response to an absence of an abnormality in the set of photoelectric data, determining a testing result of the sample added in the reaction cup according to the set of photoelectric data corresponding to the target wavelength;
in response to an abnormality in the set of photoelectric data, correcting the set of photoelectric data corresponding to the target wavelength based on other sets of photoelectric data corresponding to wavelengths other than the target wavelength; and
obtaining the testing result of the liquid in the reaction cup according to the corrected set of photoelectric data.

15. The method for controlling the sample analyzer of claim 10, wherein obtaining a testing result of a sample added in the reaction cup according to the at least two sets of photoelectric data corresponding to the at least two wavelengths comprises:
obtaining weights of the at least two wavelengths, and obtaining reactivity corresponding to each of the at least two wavelengths according to the at least two sets of photoelectric data corresponding to the at least two wavelengths;
obtaining reactivity of the liquid in the reaction cup according to the weights and the reactivity of the at least two wavelengths; and
obtaining the testing result of the sample added in the reaction cup according to the reactivity of the liquid in the reaction cup.

16. The method for controlling the sample analyzer of claim 10, further comprising:
generating at least two reaction curves corresponding to the at least two wavelengths used for the sample added in the reaction cup according to the at least two sets of photoelectric data corresponding to the at least two wavelengths used for the reaction cup, wherein each of the at least two reaction curves is obtained from intensities of signals in a plurality of detection periods of the reaction cup, and a detection period is formed by a duration of each continuous irradiation on the reaction cup by the light source component; and
outputting the at least two reaction curves corresponding to the at least two wavelengths, wherein each detection period corresponds to a respective line segment of the reaction curve.

17. A method for controlling a sample analyzer, comprising:
controlling a light source component of the sample analyzer to generate irradiation light(s), the irradiation light(s) irradiating a same position of a reaction cup or of a liquid in the reaction cup;
acquiring at least two optical signals, the at least two optical signals being produced by a light emitted from the reaction cup or the liquid in the reaction cup after the irradiation light(s) irradiates(irradiate) the reaction cup or the liquid in the reaction cup, wavelengths of the at least two optical signals being different from each other;
processing the at least two optical signals to obtain at least two sets of photoelectric data;
obtaining, from the at least two sets of photoelectric data, a first set of photoelectric data corresponding to a first wavelength and a second set of photoelectric data corresponding to a second wavelength;
correcting the first set of photoelectric data by using the second set of photoelectric data to obtain a third set of photoelectric data; and
processing the third set of photoelectric data to obtain a processing result.

18. The method for controlling the sample analyzer of claim 17, wherein correcting the first set of photoelectric data by using the second set of photoelectric data to obtain the third set of photoelectric data comprises:
obtaining a correlation parameter between the first wavelength and the second wavelength, the correlation parameter comprising a correlation curve or a correlation coefficient; and
fitting the first set of photoelectric data and the second set of photoelectric data by using the correlation parameter, to obtain the third set of photoelectric data.

19. The method for controlling the sample analyzer of claim 17, wherein a plurality of optical signals are acquired simultaneously, and obtaining, from the at least two sets of photoelectric data, the first set of photoelectric data corresponding to the first wavelength and the second set of photoelectric data corresponding to the second wavelength comprises:
obtaining a set of abnormal photoelectric data in the at least two sets of photoelectric data as the first set of photoelectric data; and
determining the second set of photoelectric data corresponding to the second wavelength according to a target testing item of a sample added in the reaction cup.

20. The method for controlling the sample analyzer of claim 17, wherein the processing result comprises a testing result obtained by testing the liquid in the reaction cup.

21. The method for controlling the sample analyzer of any one of claims 17 to 20, wherein the reaction cup rotates around the light source component, each set of photoelectric data is a signal sequence resulted from corresponding relationships between intensities of signals and timings for acquiring the signals, the at least two sets of photoelectric data acquired during continuous irradiation on the reaction cup by the light source component comprise signal sequences respectively corresponding to at least two wavelengths, and the signal sequence corresponding to a single wavelength comprises the corresponding relationships between intensities of at least two signals and timings for acquiring the at least two signals.

22. A sample analyzer, comprising a sampling device, a reagent dispensing device, a reaction device, a detection device, and a processor, wherein
the sampling device is configured to aspirate a sample from a sample container transported to a sampling position and dispense the aspirated sample to a reaction cup;
the reagent dispensing device is configured to dispense a reagent into the reaction cup;
the reaction device is configured to incubate the sample added in the reaction cup, and prepare a reaction liquid from the reagent and the sample;
the detection device comprises a light source component, an optical signal acquisition component and an analog-to-digital conversion component, wherein
the light source component is configured to generate irradiation light(s), the irradiation light(s) irradiates(irradiate) a same position of the reaction cup or of a liquid in the reaction cup, and the reaction cup rotates relative to the light source component;
the optical signal acquisition component is configured to simultaneously acquire at least two optical signals, the at least two optical signals being produced by a light emitted from the reaction cup or the liquid in the reaction cup after the irradiation light(s) irradiates(irradiate) the reaction cup or the liquid in the reaction cup, and the at least two optical signals having different wavelengths;
the analog-to-digital conversion component is configured to perform analog-to-digital conversion on the at least two optical signals to obtain at least two sets of photoelectric data, each set of photoelectric data is a signal sequence resulted from corresponding relationships between intensities of signals and timings for acquiring the signals, the at least two sets of photoelectric data acquired during continuous irradiation on the reaction cup by the light source component comprise signal sequences respectively corresponding to at least two wavelengths, and the signal sequence corresponding to a single wavelength comprises the corresponding relationships between intensities of at least two signals and timings for acquiring the at least two signals; and
the processor is configured to process the at least two sets of photoelectric data corresponding to the at least two wavelengths to obtain a processing result.

23. The sample analyzer of claim 22, further comprising a light splitting device configured to split the light emitted from the reaction cup into the at least two optical signals with the at least two wavelengths.

24. The sample analyzer of claim 22, wherein
the sample analyzer further comprises a light splitting device configure to split the irradiation light generated by the light source component into at least two irradiation lights with the at least two wavelengths, the at least two irradiation lights with the at least two wavelengths irradiate the same position of the reaction cup or of the liquid of the reaction cup simultaneously; or
the light source component comprises at least two light sources, irradiation lights from the at least two light sources have different wavelengths and irradiate the same position of the reaction cup or of the liquid in the reaction cup simultaneously; or
the light source component comprises a light source array, irradiation lights generated by at least two light sources in the light source array have different wavelengths, the reaction cup rotates relative to the light source component, and the at least two light sources are arranged along a rotation direction of the reaction cup, such that the reaction cup passes through each light source in the light source array in turn.

25. The sample analyzer of any one of claims 22 to 24, wherein the processor is further configured to:
perform state monitoring on the sample analyzer by using the at least two sets of photoelectric data corresponding to the at least two wavelengths; or
obtain a testing result of the liquid in the reaction cup according to the at least two sets of photoelectric data corresponding to the at least two wavelengths.
